(19) **Europäisches Patentamt / European Patent Office / Office européen des brevets**

(11) **EP 4 083 487 B1**

(12) **FASCICULE DE BREVET EUROPEEN**

(45) Date de publication et mention de la délivrance du brevet:
**27.12.2023 Bulletin 2023/52**

(51) Classification Internationale des Brevets (IPC):
**F16L 29/04** *(2006.01)*    **F16L 27/00** *(2006.01)*
F16L 37/34 *(2006.01)*    F16L 37/50 *(2006.01)*

(21) Numéro de dépôt: **22170483.6**

(52) Classification Coopérative des Brevets (CPC):
**F16L 29/04; F16L 27/00;** F16L 37/34; F16L 37/50

(22) Date de dépôt: **28.04.2022**

(54) **ELÉMENT MÂLE OU FEMELLE DE RACCORD FLUIDIQUE ET RACCORD FLUIDIQUE COMPRENANT UN TEL ÉLÉMENT**

STECKER ODER BUCHSE EINES FLUIDANSCHLUSSES UND FLUIDANSCHLUSS MIT EINEM SOLCHEN STECKER BZW. MIT EINER SOLCHEN BUCHSE

MALE OR FEMALE FLUID CONNECTOR ELEMENT AND FLUID CONNECTOR INCLUDING SUCH AN ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2021 FR 2104493**

(43) Date de publication de la demande:
**02.11.2022 Bulletin 2022/44**

(73) Titulaire: **Staubli Faverges**
**74210 Faverges-Seythenex (FR)**

(72) Inventeurs:
- **DURIEUX, Christophe**
**73200 GILLY SUR ISERE (FR)**
- **MARQUES BARROCA, Serafim**
**73200 ALBERTVILLE (FR)**

(74) Mandataire: **Lavoix**
**62, rue de Bonnel**
**69448 Lyon Cedex 03 (FR)**

(56) Documents cités:
**EP-A1- 2 966 396**    **AT-B- 196 437**
**CN-U- 205 896 502**    **US-A- 3 508 580**

**Description**

La présente invention concerne un élément mâle ou femelle de raccord fluidique, ainsi qu'un raccord permettant la jonction de canalisations de fluide sous pression et comprenant un tel élément de raccord.

Un domaine d'application de l'invention est celui des circuits de refroidissement dans lequel des éléments mâle et femelle d'un raccord peuvent être montés sur des supports, tels que des plaques équipées d'au moins un circuit de circulation de fluide. Avec de tels ensembles, il est nécessaire de tenir compte de possibles défauts d'alignement entre les éléments mâle et femelle d'un raccord, en permettant une possibilité d'ajustement d'un embout d'un des éléments du raccord selon une direction perpendiculaire à l'axe d'emmanchement.

Il est ainsi connu de US-A-3 508 580 de prévoir un élément mâle de raccord dont un embout est équipé d'une bride logée dans un volume interne de réception du corps de l'élément mâle, avec interposition d'un joint d'étanchéité entre une surface arrière de la bride et le corps. Un coulissement de la bride dans le volume interne de réception permet d'ajuster la position de l'embout de l'élément mâle sur l'axe d'emmanchement défini par l'élément femelle. Dans ce matériel, en configuration désaccouplée du raccord, lorsque le clapet est en position de fermeture de l'élément mâle, la pression du fluide au sein de l'élément mâle de raccord induit sur l'embout un effort axial vers l'avant qui s'exerce sur une section définie par une section d'étanchéité au niveau du joint interposé entre une surface arrière de la bride et le corps, cet effort ayant pour effet de plaquer la face avant de la bride contre le corps de l'élément mâle. Des billes doivent être prévues pour faciliter les mouvements radiaux de la bride dans le volume interne du corps. L'effort longitudinal de pression s'oppose en pratique à l'alignement des axes centraux des éléments mâle et femelle du raccord, qui intervient avant que les conduits de fluide soient mis en communication. Il en résulte une détérioration relativement rapide de l'extrémité avant de l'embout de l'élément mâle et de l'embouchure tronconique de l'élément femelle qui viennent en contact l'un avec l'autre lors d'un mouvement d'emmanchement.

C'est à ces problèmes qu'entend plus particulièrement répondre l'invention, en proposant un nouvel élément de raccord dans lequel l'effet d'un effort axial de pression qui s'exerce sur l'embout est diminué, ce qui facilite les déplacements radiaux de l'embout, sans augmenter les pertes de charge au sein du raccord, en configuration accouplée de celui-ci.

A cet effet, l'invention concerne un élément mâle ou femelle de raccord fluidique, conçu pour la jonction de canalisations de fluide sous pression,

- cet élément de raccord comprenant un corps, un embout et un clapet;
- le corps s'étendant selon un axe longitudinal, entre un côté avant tourné dans un sens d'emmanchement de l'élément de raccord avec un élément complémentaire du raccord et un côté arrière opposé au côté avant ;
- le corps délimitant, d'une part, un logement de réception partielle de l'embout et, d'autre part, au moins une première portion d'un conduit interne de circulation de fluide dans l'élément de raccord, la première portion étant disposée en arrière par rapport au logement de réception et communiquant fluidiquement avec le logement de réception;
- l'embout comprenant une partie tubulaire qui dépasse vers l'avant hors du corps ;
- , une deuxième portion du conduit interne étant ménagée dans un volume interne de l'embout et délimitée sur l'avant par un orifice avant de la partie tubulaire ;
- le clapet étant logé dans le volume interne de l'embout avec possibilité de mouvement entre une position avancée de fermeture où le clapet obture l'orifice avant de la partie tubulaire et une position reculée d'ouverture où le clapet ne s'oppose pas à la circulation de fluide dans le conduit interne ;
- l'embout étant équipé d'une bride formée en saillie externe et en arrière par rapport à la partie tubulaire, la bride étant reçue dans le logement de réception avec possibilité de mouvement par rapport au corps uniquement parallèlement à un plan radial à l'axe longitudinal ; et
- une première barrière d'étanchéité formée d'au moins un joint d'étanchéité étant interposée entre une surface arrière de la bride et une face avant du corps, cette face avant délimitant sur l'arrière le logement de réception et étant disposée en regard de la surface arrière de la bride.

Selon l'invention,

- une deuxième barrière d'étanchéité formée d'au moins un joint d'étanchéité est interposée entre une surface avant de la bride et une face arrière du corps, cette face arrière délimitant sur l'avant le logement de réception et étant disposée en regard de la surface avant de la bride ;
- une troisième portion du conduit interne, intermédiaire entre la première portion et la deuxième portion, est délimitée radialement autour de la bride, entre une surface périphérique externe de la bride et une surface périphérique interne du corps délimitant le logement de réception radialement à l'axe longitudinal ;
- un bouchon obture sur l'arrière la deuxième portion du conduit interne ;
- les deuxième et troisième portions du conduit interne communiquent fluidiquement par au moins un passage ménagé dans l'embout et qui débouche dans le volume interne de l'embout, en avant du bouchon, et la surface périphérique externe de la bride ; et

- une chambre interne est ménagée dans l'élément de raccord et séparée du conduit interne par le corps, par la bride, par le bouchon et par la première barrière d'étanchéité.

Grâce à l'invention, la conjonction des première et deuxième barrières d'étanchéité permet de réduire l'effort du fluide sous pression s'appliquant sur la bride, ce qui facilite l'alignement de l'embout sur le corps de l'élément de raccord complémentaire. Les première, deuxième et troisième parties du conduit interne de circulation de fluide et le ou les passages permettent un écoulement avec des pertes de charge minimisées lorsque l'élément de raccord est accouplé avec un élément de raccord complémentaire. En outre, la chambre interne est isolée du conduit interne donc à une pression différente de celle du fluide présent dans le raccord, ce qui permet d'équilibrer, en totalité ou en partie, les efforts de pression qui s'exercent axialement sur l'embout, donc sur sa bride.

Selon des aspects avantageux mais non obligatoires de l'invention, un tel élément de raccord peut incorporer une ou plusieurs des caractéristiques suivantes, prises selon toute combinaison techniquement admissible :

- Un rapport entre une aire d'une section d'étanchéité délimitée par la deuxième barrière d'étanchéité et une aire d'une section d'étanchéité délimitée par la première barrière d'étanchéité est compris entre 0,85 et 1,15, de préférence entre 0,95 et 1,05, de préférence encore égal à 1.
- Au moins un évent relie la chambre interne à l'extérieur de l'élément de raccord et s'étend à travers le corps, de préférence parallèlement au plan radial.
- La chambre interne est délimitée par une partie interne du corps, de forme tronconique centrée sur un axe parallèle à l'axe longitudinal, convergente vers l'arrière de l'élément de raccord, et qui est reliée à une portion intermédiaire du corps disposée autour de la partie interne par au moins une patte de liaison, alors que la première portion du conduit interne s'étend entre la partie interne et la portion intermédiaire du corps et alors que le logement de réception débouche vers l'arrière dans la première portion du conduit interne.
- Un rapport entre une épaisseur d'une patte de liaison, mesurée parallèlement à l'axe longitudinal du corps, et une longueur de la partie interne du corps, mesurée selon le même axe longitudinal, est strictement inférieur à 1, de préférence compris entre 0,15 et 0,40, de préférence encore égal à 0,25.
- La partie interne du corps délimitant la chambre interne, la ou les pattes de liaison et la portion intermédiaire du corps forment ensemble une pièce monobloc.
- La bride comprend une collerette avant formant la surface avant de la bride et une collerette arrière formant la surface arrière de la bride, alors que lorsqu'une surface périphérique externe de la collerette avant est radialement en contact avec la surface périphérique interne du corps délimitant radialement le volume de réception , un jeu annulaire d'épaisseur radiale minimale non nulle existe entre une surface périphérique externe de la collerette arrière et la surface périphérique interne du corps et alors que les première et deuxième portions du conduit interne sont en communication fluidique à travers le jeu annulaire.
- Les collerettes avant et arrière délimitent entre elles, le long de l'axe longitudinal, un volume annulaire ouvert sur le logement de réception, alors que chaque passage débouche dans ce volume annulaire.
- Le corps comprend un couvercle, rapporté dans une jupe du corps et qui définit un orifice avant du corps à travers lequel la partie tubulaire de l'embout dépasse hors du corps vers l'avant, alors que la deuxième barrière d'étanchéité est interposée entre une surface avant de la collerette avant et une face arrière du couvercle qui entoure l'orifice avant, alors que la surface périphérique interne du corps est formée sur le couvercle, alors qu'une portion de surface arrière de la surface périphérique interne est évasée vers l'arrière et fait face radialement à la surface périphérique externe de la collerette arrière et alors que les surfaces périphériques externes des collerettes avant et arrière sont cylindriques à section externe circulaire, de même diamètre externe, et coaxiales.
- La surface arrière et la surface avant de la bride sont des surfaces axiales planes et chaque joint d'étanchéité formant la première barrière d'étanchéité et chaque joint d'étanchéité formant la deuxième barrière d'étanchéité est logé dans une gorge ménagée sur la surface arrière de la bride, respectivement dans une gorge ménagée sur la surface avant de la bride.
- Le bouchon est une pièce rapportée sur l'embout, montée de façon étanche dans le volume interne de l'embout en regard d'un épaulement interne arrière de l'embout.
- Le clapet est équipé d'une jupe ouverte vers l'arrière, la jupe du clapet est percée d'orifices traversants qui débouchent sur une surface périphérique externe du clapet et l'embout délimite une surface interne apte à coopérer radialement avec le clapet, en arrière des orifices traversants, lorsque le clapet est en position reculée d'ouverture.
- Chaque passage ménagé dans l'embout s'étend selon un axe incliné qui converge vers l'avant vers un axe longitudinal central de la partie tubulaire, avec un angle d'inclinaison par rapport à cet axe compris entre 30° et 50°, de préférence égal à 40°.
- Chaque passage ménagé dans l'embout a une section en forme de portion d'anneau centrée sur un axe longitudinal central de la partie tubulaire.
- L'embout comprend un poussoir monté à l'intérieur de la partie tubulaire, le clapet est de forme annulaire et monté autour du poussoir et, en position avancée de fermeture, le clapet coopère de manière étanche avec le poussoir et avec la partie tubulaire pour obturer l'orifice avant de la partie tubulaire.

Selon un autre aspect, l'invention concerne un raccord de jonction de canalisations de fluide sous pression, ce raccord comprenant un élément de raccord mâle et un élément de raccord femelle dont l'un au moins est tel que mentionné ci-dessus.

Un tel raccord présente les mêmes avantages que ceux mentionnés ci-dessus au sujet de l'élément de raccord.

L'invention sera mieux comprise et d'autres avantages de celle-ci apparaîtront plus clairement à la lumière de la description qui va suivre de quatre modes de réalisation d'un élément de raccord et d'un raccord conforme à l'invention, donnée uniquement à titre d'exemple et faite en référence aux dessins annexés dans lesquels :

[Fig. 1] la figure 1 est une coupe axiale de principe d'un élément mâle de raccord conforme à l'invention et appartenant à un raccord conforme à l'invention ;
[Fig. 2] la figure 2 est une coupe axiale de principe d'un élément femelle complémentaire de l'élément mâle de la figure 1 et appartenant au même raccord ;
[Fig. 3] la figure 3 est une coupe axiale de principe du raccord comprenant les éléments mâle et femelle des figures 1 et 2 en cours d'emmanchement ;
[Fig. 4] la figure 4 est une coupe analogue à la figure 3 en configuration accouplée des élément mâle et femelle du raccord ;
[Fig. 5] la figure 5 est une coupe à plus grande échelle selon la ligne V-V à la figure 4 ;
[Fig. 6] la figure 6 est une coupe à la même échelle que la figure 5 selon la ligne VI-VI à la figure 4 ;
[Fig. 7] la figure 7 est une vue en perspective éclatée de certains éléments de l'élément mâle de raccord représenté aux figures précédentes ; sur cette figure, les joints d'étanchéité sont omis, ce qui laisse voir les gorges de réception de certains de ces joints ;
[Fig. 8] la figure 8 est une coupe longitudinale de principe d'un raccord conforme à un deuxième mode de réalisation en configuration découplée, incorporant un élément de raccord femelle conforme à l'invention ;
[Fig. 9] la figure 9 est une coupe analogue à la figure 8 en configuration accouplée du raccord ;
[Fig. 10] la figure 10 est une coupe axiale de principe d'un élément mâle de raccord conforme à un troisième mode de réalisation de l'invention ; et
[Fig. 11] la figure 11 est une coupe analogue à la figure 4 pour un raccord conforme à un quatrième mode de réalisation de l'invention.

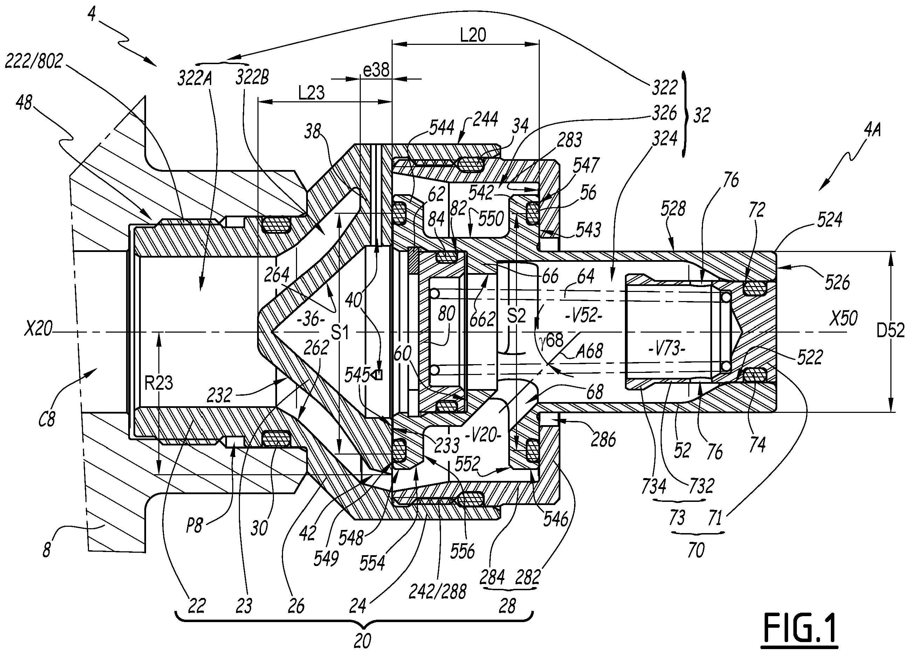

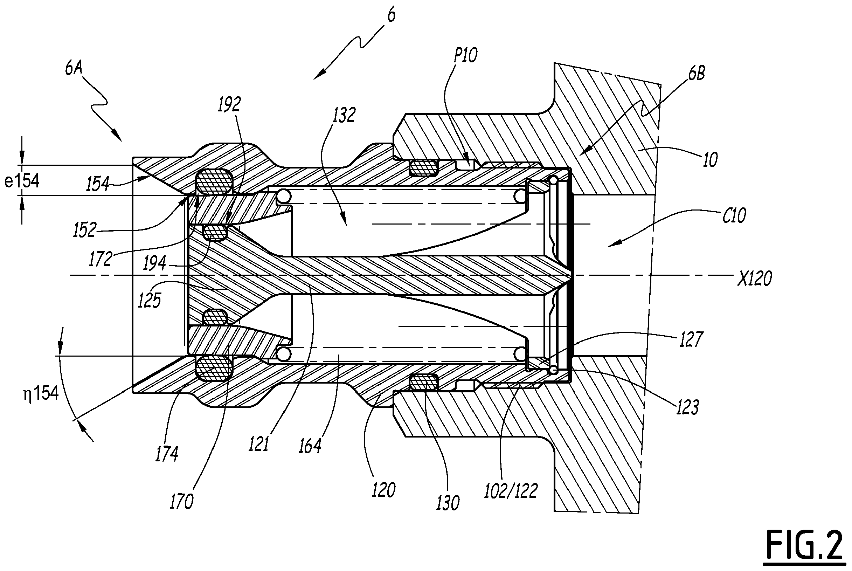

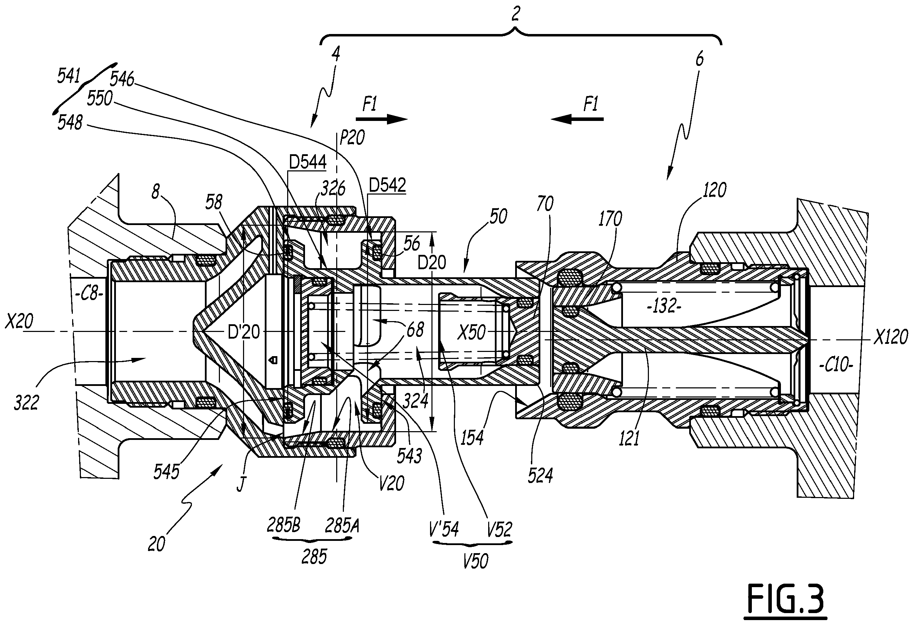

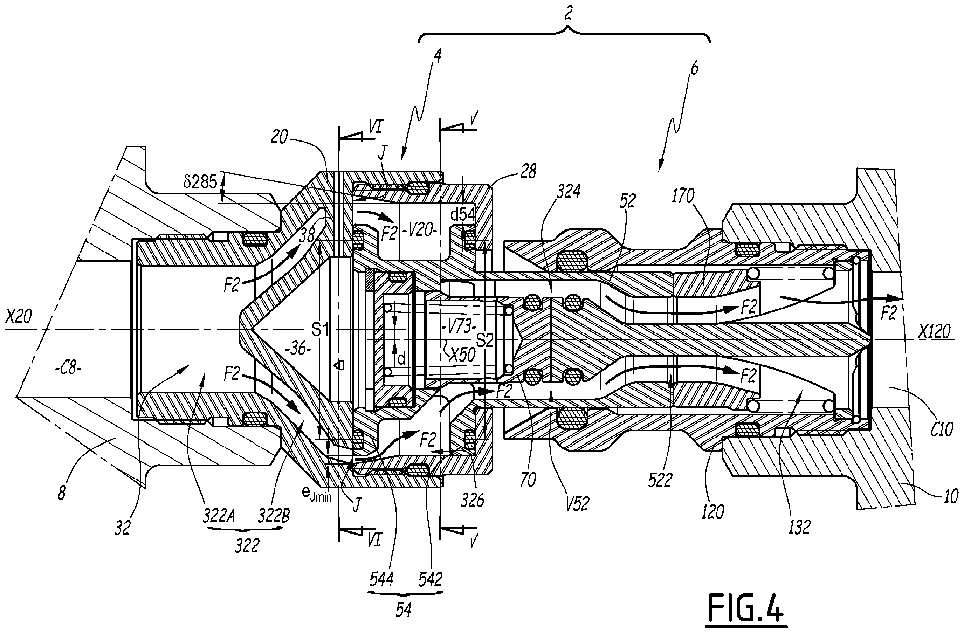

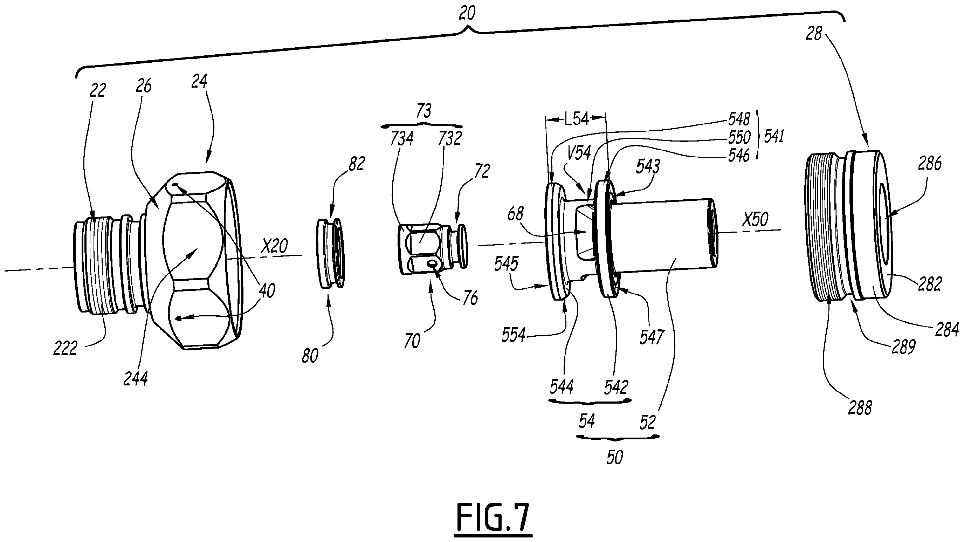

Le raccord fluidique 2 représenté aux figures 1 à 7 comprend un élément mâle 4 représenté seul à la figure 1 et un élément femelle 6 représenté seul à la figure 2, ces éléments mâle et femelle étant prévus pour s'emmancher l'un dans l'autre en passant successivement d'une configuration désaccouplée représentée aux figures 1 et 2, à une configuration en cours d'accouplement représentée à la figure 3 puis à une configuration accouplée représentée aux figures 4 à 6.

L'élément mâle 4 est vissé sur une plaque 8, qui forme un support et dans laquelle est ménagée une canalisation C8 où circule un fluide sous pression, tel qu'un liquide caloporteur de circuit de refroidissement.

L'élément mâle 4 comprend un corps 20 qui inclut une portion arrière 22, une jupe avant 24, une portion intermédiaire 26, qui relie la portion arrière 22 et la jupe 24, et un couvercle 28 rapporté sur la jupe 24.

La portion arrière 22 est tubulaire, à section cylindrique et centrée sur un axe longitudinal X20 du corps mâle 20. Cette portion arrière 22 est pourvue d'un filetage externe 222 destiné à être vissé dans un taraudage correspondant 802 ménagé dans un perçage P8 de la plaque 8. Un joint d'étanchéité 30 est interposé entre la portion arrière 22 et la paroi périphérique du perçage P8.

L'axe X20 constitue également un axe d'emmanchement pour l'élément mâle 4.

L'élément mâle 4 s'étend vers l'avant à partir de la plaque 8.

On définit un côté avant 4A de l'élément mâle 4 comme le côté de cet élément tourné vers l'élément femelle 6 au début de l'accouplement, c'est-à-dire tourné dans le sens d'emmanchement selon l'axe longitudinal X20. On définit un côté arrière 4B de l'élément mâle 4 comme le côté de cet élément opposé au côté avant 4A. Ici, le côté arrière 4B de l'élément mâle 4 est tourné vers la plaque 8 et vers la canalisation C8. Dans ce qui suit, l'adjectif « avant » est utilisé pour qualifier un objet ou une surface de l'élément de raccord tourné vers le côté avant d'un tel élément de raccord, alors que le l'adjectif « arrière » est utilisé pour qualifier un objet ou une surface tourné vers le côté arrière d'un tel élément de raccord.

On définit une surface radiale ou périphérique de l'élément mâle 4 comme une surface annulaire centrée sur l'axe X20 et parallèle à cet axe. On définit une surface axiale de l'élément mâle 4 comme une surface perpendiculaire à l'axe X20. On définit une surface externe de l'élément mâle 4 comme une surface orientée à l'opposé à l'axe X20. On définit une surface interne de l'élément mâle 4 comme une surface orientée vers l'axe X20.

Un conduit interne de circulation de fluide 32 est prévu dans l'élément mâle 4 pour la circulation de fluide provenant de la canalisation C8 et comprend une première portion arrière 322, une deuxième portion avant 324 et une troisième portion intermédiaire 326 qui relie les portion arrière et avant 322 et 324.

La portion arrière 322 du conduit interne 32 comprend une première sous-portion 322A, de forme cylindrique à section circulaire, centrée sur l'axe X20 et délimitée par la portion arrière 22 du corps 20, et une deuxième sous-portion 322B, également centrée sur l'axe X20, délimitée à l'intérieur de la portion intermédiaire 26 du corps 20 et divergente vers l'avant.

La portion avant 324 du conduit interne 32 est située dans un volume interne V52 d'une partie tubulaire 52 d'un embout 50, dans lequel est monté coulissant un clapet 70 et qui traverse de part en part cette partie tubulaire.

La portion intermédiaire 326 du conduit interne 32 est disposée, radialement à l'axe X20, à l'intérieur de la jupe 24.

La jupe 24 est pourvue d'un taraudage interne 242.

D'autre part, le couvercle 28 comprend un fond 282 et une jupe 284 qui s'étend vers l'arrière de l'élément 4 à partir du fond 282. Le fond 282 définit un orifice central 286 centré sur l'axe X20. La jupe 284 est pourvue d'un filetage externe 288 complémentaire du taraudage 242. Le couvercle 28 est monté sur la jupe avant 24, avec interposition d'un joint d'étanchéité 34 monté dans une gorge périphérique externe 289 du couvercle 28, par vissage du filetage 288 dans le taraudage 242. Ainsi, le couvercle 28 constitue la partie avant du corps 20 et l'orifice 286 est un orifice avant de ce corps.

Le corps 20 comprend également un chapeau 23 qui est une partie interne, de forme globalement conique et convergente vers l'arrière de l'élément 4. On note 232 la surface périphérique externe du chapeau 23.

La surface périphérique interne 262 de la portion intermédiaire 26 est globalement conique et convergente vers l'arrière. Les parties 23 et 26 sont centrées sur l'axe X20 et distantes radialement l'une de l'autre par rapport à cet axe, de sorte que la portion intermédiaire 26 entoure le chapeau 23 et que la portion arrière 322 du conduit interne 32, qui a une section en forme de disque au niveau de la sous-portion 322A à l'intérieur de la portion arrière 22, prend une section de forme annulaire de rayon croissant en allant vers l'avant, au niveau de la deuxième sous-portion 322B, à l'intérieur de la portion intermédiaire 26 et autour du chapeau 23. La deuxième sous-portion 322B de la portion arrière 322 du conduit interne 32 est définie entre les surfaces 232 et 262.

On note 264 la surface périphérique interne du chapeau 23 qui est globalement conique et qui délimite, radialement et sur l'arrière de l'embout 50, une chambre interne 36 ménagée à l'intérieur du corps mâle 20, autour de l'axe longitudinal X20.

Le chapeau 23 est relié au reste du corps 20, en particulier dans la zone de jonction entre la portion intermédiaire 26 et la jupe avant 24, par trois pattes de liaison 38 réparties à 120° autour de l'axe X20 et qui font saillie à l'opposé de l'axe X20 depuis la surface périphérique externe 232 du chapeau 23. Les pattes de liaison 38 peuvent également être dénommées « pattes de renfort » ou « renforts » puisqu'elles contribuent au positionnement du chapeau 23 à l'intérieur du corps 20.

Le nombre et la répartition des pattes de liaison 38 ne sont pas limitatifs. Le nombre de pattes de liaison est, en pratique, compris entre 1 et 6 et leur répartition est adaptée en fonction de leur nombre, de préférence régulièrement autour de l'axe X20.

Chaque patte de liaison 38 est traversée par un évent 40. Chaque évent 40 est rectiligne et s'étend selon une direction radiale à l'axe X20, de la chambre interne 36 jusqu'à une surface périphérique externe 244 du corps 20, à travers le chapeau 23, une patte de liaison 38 et la portion intermédiaire 26. Ainsi chaque évent 40 relie la chambre interne 36 à l'extérieur de l'élément de raccord 4.

Les évents 40 sont rectilignes avec une section polygonale, par exemple en forme de pentagone.

Les évents 40 permettent d'équilibrer la pression entre la chambre interne 36 et l'atmosphère ambiante, autour de l'élément de raccord 4.

En variante, seules certaines pattes de liaison 38 sont équipées d'un évent 40.

Selon une autre variante, la section du ou des évents 40 est circulaire ou oblongue.

On note e38 l'épaisseur d'une patte de liaison 38 mesurée parallèlement à l'axe X20. On note, par ailleurs, L23 la longueur axiale du chapeau 23, également mesurée selon l'axe X20. La longueur L23 correspond à la longueur d'encombrement du chapeau 23 et est égale à la projection sur l'axe X20 de la surface périphérique externe 232. Les pattes de liaison 38 sont moins épaisses, selon l'axe X20, que le chapeau interne 23 n'est long selon cet axe. En d'autres termes, le rapport e38/L23 est strictement inférieur à 1. En pratique, ce rapport peut être compris entre 0,15 et 0,40, de préférence égal à 0,25.

Ici, les pattes de liaison 38 s'étendent uniquement autour de la partie avant du chapeau interne 23. Dans ces conditions, la deuxième sous-portion 322B du conduit 32 s'étend tout autour du chapeau 23, à l'arrière des pattes de liaison 38 et, radialement à l'axe X20, entre les surfaces 232 et 262.

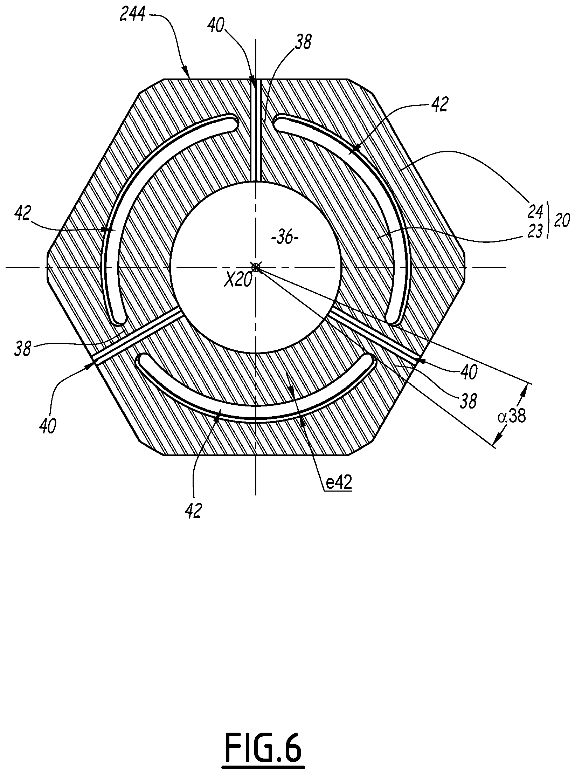

Comme cela ressort de la figure 6, chaque patte de liaison 38 s'étend sur un secteur angulaire dont on note α38 l'angle au sommet autour de l'axe X20. Ici, l'angle α38 est égal à 13° de sorte que l'ensemble des trois pattes de liaison 38 ne limite que faiblement la section de passage du conduit interne 32 autour du chapeau 23.

En effet, entre deux pattes de liaison 38, il est prévu, autour du chapeau 23, une lumière 42 en forme d'arc de cercle centré sur l'axe X20 dont on note e42 l'épaisseur radiale, mesurée selon une direction radiale à l'axe X20. En pratique, l'épaisseur radiale e42 est comprise entre 10 et 20% du rayon maximum R23 du chapeau 23.

Les lumières 42 constituent des passages qui mettent en communication les portions 322 et 326 du conduit interne 32.

Le nombre de lumières 42 est, de préférence, égal au nombre de pattes de liaison 38. Dans l'exemple, trois lumières 42 sont prévues autour du chapeau 23.

Le nombre de lumières 42 n'est pas limitatif. Il est supérieur ou égal à 1 et, en pratique, adapté en fonction du nombre de pattes de liaison 38.

Compte tenu de la valeur de l'angle α38, les trois pattes de liaison 38 ne limitent que faiblement l'amplitude angulaire des lumières 42. Ici, le rapport entre la somme des secteurs angulaires occupée par les pattes de liaison 38, soit 39°, et 360° est de l'ordre de 0,11. En pratique, ce rapport est choisi entre 0,05 et 0,2.

On note 233 la face avant du chapeau 23. La face avant 233 constitue également la face avant des pattes de liaison 38 car celles-ci sont affleurantes avec le chapeau 23 sur l'avant.

On note 283 la face arrière du fond 282 du couvercle 28.

Les faces avant 233 et arrière 283 sont annulaires, planes et perpendiculaires à l'axe X20. Elles se font face. En d'autres termes, elles sont en regard l'une de l'autre. Elles délimitent, le long de l'axe X20, un volume V20 interne au corps 20.

On note P20 un plan médian du volume 20, perpendiculaire à l'axe X20, parallèle aux faces 233 et 283 et situé à égale distance de ces faces le long de l'axe X20. Le plan P20 est radial à l'axe X20 et les évents 40 s'étendent parallèlement au plan P20.

On note L20 la longueur axiale du volume V20, c'est-à-dire la distance, mesurée parallèlement à l'axe X20, entre les faces 233 et 283.

On note 285 la surface périphérique interne de la jupe 284. Cette surface délimite radialement vers l'extérieur le volume V20.

En l'absence de l'embout 50, le volume V20 débouche vers l'avant sur l'extérieur de l'élément de raccord 4 à travers l'orifice 286, au niveau de la face arrière 283, et vers l'arrière dans la chambre interne 36, au niveau de la face avant 233. En l'absence ou en présence de l'embout 50, le volume V20 débouche dans la deuxième sous-portion 322B, au niveau de la face avant 233. Le volume V20 communique donc toujours fluidiquement avec la portion arrière 322 du conduit interne.

Les parties 23, 24 et 26 du corps 20 constituent ensemble une pièce monobloc, de préférence réalisée par impression 3D et de préférence monobloc également avec la portion arrière 22, comme c'est le cas dans l'exemple des figures. Ceci présente l'avantage que la géométrie de cette pièce est bien définie, de sorte que les tolérances dimensionnelles concernant notamment la portion arrière 322 du conduit 32, les évents 40 et les lumières 42 sont bien maîtrisées.

L'embout 50 est monté sur le corps 20 et comprend sur l'avant la partie tubulaire creuse 52 de forme extérieure cylindrique à section circulaire, dont on note D52 le diamètre et dans le volume interne V52 de laquelle est logé le clapet 70. Lorsque l'embout 50 est partiellement reçu dans le volume V20, sa partie tubulaire 52 dépasse du corps 20 vers l'avant, à travers l'orifice 286.

On note X50 un axe longitudinal de l'embout 50, le long duquel le clapet 70 est mobile à l'intérieur de la partie tubulaire 52 et qui forme un axe central de la partie tubulaire 52.

A l'arrière de la partie tubulaire 52, l'embout 50 comprend une bride 54, dont on note 541 la surface périphérique externe et qui comprend une collerette avant 542 et une collerette arrière 544. La collerette avant 542, la collerette arrière 544, la partie tubulaire 52 constituent ensemble une pièce monobloc.

Chacune des collerettes 542, 544 présente une surface périphérique externe 546, respectivement 548, qui est cylindrique à section circulaire, centrée sur l'axe X50, et dont on note D542, respectivement D544, le diamètre externe. Les diamètres externes D542 et D544 sont strictement supérieurs au diamètre D52. En d'autres termes, la bride 54 est formée en saillie externe par rapport à la partie tubulaire 52. Les surfaces périphériques externes 546 et 548 sont coaxiales. Dans ce mode de réalisation, les diamètres externes D542 et D544 sont égaux.

Longitudinalement entre les collerettes 542 et 544, le diamètre de la bride 54 est réduit, de sorte qu'il est formé, autour de la bride 54 et entre ces collerettes, un volume annulaire V54 ouvert radialement vers l'extérieur de la bride 54. Le fond de ce volume annulaire est défini par une surface périphérique externe 550 de la bride 54, dont le diamètre est inférieur au diamètre des surfaces périphériques externes 546 et 548. Les surfaces 546, 548 et 550 constituent ensemble la surface périphérique externe 541 de la bride 54, cette surface périphérique 541 étant étagée le long de l'axe X50.

On note 543 la surface avant de la collerette 542, c'est-à-dire la surface de cette collerette qui est perpendiculaire à l'axe X50 et tournée vers la partie tubulaire 52.

On note 545 la surface arrière de la collerette 544 qui est également perpendiculaire à l'axe X50, mais orientée à l'opposé de la partie tubulaire 52.

Les surfaces 543 et 545 sont annulaires, centrées sur l'axe X50, et planes. Les surfaces 543 et 545 sont également des surfaces axiales.

La surface périphérique externe 541 est disposée longitudinalement entre la surface avant 543 et la surface arrière 545 de la bride 54.

On note L54 la longueur axiale de la bride 54, mesurée parallèlement à l'axe X50, entre les surfaces 543 et 545.

La longueur L54 est égale, au jeu de fonctionnement près, à la longueur L20.

En configuration montée de l'embout 50, la bride 54 est reçue dans le volume V20 défini par le corps 20 avec une possibilité de mouvement par rapport au corps 20 uniquement selon des directions parallèles au plan P20, c'est-à-dire selon des directions radiales à l'axe X20. Ceci découle des valeurs respectives des longueurs L20 et L54. Ainsi, le volume V20 constitue un logement de réception de la bride 54 en configuration assemblée de l'élément de raccord mâle 4.

Dans cette configuration, le volume V54 est ouvert vers la surface périphérique interne 285 et vers la partie du volume V20 qui n'est pas occupée par la bride 54. La surface avant 543 est en regard de la face arrière 283 selon l'axe X20. La surface arrière 545 est en regard de la face avant 233 selon l'axe X20.

La portion intermédiaire 326 du conduit interne 32 est délimitée radialement, autour de la bride 54, entre la surface périphérique interne 285 du corps 20 et la surface périphérique externe 541 de la bride 54.

Un premier joint d'étanchéité 56, de type joint torique, par exemple en élastomère, est monté dans une gorge 547 ménagée sur la surface avant 543, alors qu'un deuxième joint d'étanchéité 58, de type joint torique, par exemple en élastomère, est monté dans une gorge 549 ménagée dans la surface arrière 545. En configuration montée de l'embout 50 sur le corps 20, les joints d'étanchéité 56 et 58 sont respectivement en appui contre les faces 283 et 233 et contre la bride 54. La surface périphérique externe 541 de la bride 54 est située dans le volume V20, le long de l'axe X20, entre les deux joints d'étanchéité 56, 58.

Ainsi, une première barrière d'étanchéité est constituée par le joint 58 interposé entre les surfaces 233 et 545 en regard l'une de l'autre. La section d'étanchéité S1 de cette barrière d'étanchéité est définie comme une surface fictive de l'embout 50, axiale et tournée vers l'avant, sur laquelle s'applique la résultante de l'effort vers l'arrière exercé par la pression du fluide contenu dans le conduit interne 32 lorsque le clapet 70 est en position avancée de fermeture. Cette section d'étanchéité S1 est délimitée par le joint 58. Cette section d'étanchéité S1 est en effet un disque dont le rayon est égal au rayon moyen du joint 58 pris entre le centre du tube et le centre du tore formant le joint 58. La trace de cette section S1 est représentée par son diamètre aux figures 1 et 4.

Une deuxième barrière d'étanchéité est constituée par le joint 56 interposé entre les surfaces 543 et 283 en regard l'une de l'autre. On note S2 la section d'étanchéité de cette barrière d'étanchéité, qui est définie comme une surface fictive de l'embout 50, axiale et tournée vers l'arrière, sur laquelle s'applique la résultante de l'effort vers l'avant exercé par la pression du fluide contenu dans le conduit interne 32 lorsque le clapet 70 est en position avancée de fermeture. Cette section d'étanchéité S2 est délimitée par le joint 56. Cette section d'étanchéité S2 est en effet un disque dont le rayon est égal au rayon moyen du joint 56 pris entre le centre du tube et le centre du tore formant le joint 56. La trace de cette section S2 est représentée par son diamètre aux figures 1 et 4.

Les gorges 547 et 549 et les joints 56 et 58 ont la même géométrie. Dans ces conditions, les sections d'étanchéité S1 et S2 sont identiques. En particulier, leurs aires respectives ont la même valeur.

Le clapet 70 est mobile axialement, le long de l'axe X50 dans le volume V50, entre une première position avancée de fermeture et une deuxième position reculée d'ouverture. Dans la première position avancée de fermeture représentée à la figure 1 et qui correspond à la configuration désaccouplée, le clapet 70 est en butée avant contre la partie tubulaire 52 et obture un orifice avant 522 de la partie tubulaire 52. Dans la deuxième position reculée d'ouverture, représentée à la figure 4 qui correspond à la configuration accouplée, le clapet 70 est distant, le long de l'axe X50, vers l'arrière, de l'orifice avant 522 qu'il n'obture pas, au point que le clapet 70 ne s'oppose pas à la circulation de fluide dans le conduit interne 32.

La portion avant 324 du conduit interne 32 est délimitée vers l'avant dans le volume V52 par l'orifice avant 522.

On note 524 une arête de liaison entre une face avant annulaire 526 de la partie tubulaire 52, qui entoure l'orifice avant 522, et la surface périphérique externe 528 de cette partie, qui est de diamètre D52.

Le clapet 70 est pourvu d'une gorge périphérique externe 72 dans laquelle est reçu un joint d'étanchéité 74 qui vient en appui contre la surface périphérique interne de la partie tubulaire 52 qui définit l'orifice 522, afin d'assurer l'étanchéité de la fermeture dans la configuration de la figure 1.

Un bouchon 80 est monté dans l'embout 50, à l'intérieur de la bride 54, par le côté longitudinal opposé à la partie tubulaire 52. Ce bouchon 80 est disposé dans un volume interne V'54 de la bride 54 disposé à l'arrière du volume V52 et débouchant sur la surface arrière 545. Les volumes V52 et V'54 définissent ensemble le volume interne V50 de l'embout 50. Le bouchon 80 obture et délimite la portion avant 324 du conduit interne de circulation de fluide 32, vers l'arrière. Le bouchon 80 est retenu longitudinalement dans l'embout 50 entre un épaulement interne arrière 60 de l'embout 50, avec lequel il est en regard, et un segment d'arrêt 62, par exemple de type circlip, monté dans l'embout 50.

Le bouchon 80 est équipé d'une gorge périphérique 82 dans laquelle est logé un joint d'étanchéité 84 qui vient en appui contre une surface périphérique interne de l'embout 50. Le bouchon 80 coopère avec l'embout 50 via le joint 84 pour l'obturation étanche de l'extrémité arrière de la portion avant 324 du conduit interne 32.

Lorsque le bouchon 80 est monté sur l'embout 50 et lorsque l'embout est en place sur le corps 20, avec sa bride 54 reçue dans le logement formé par le volume V20, le bouchon 80 est en regard de la chambre interne 36, selon une direction parallèle à l'axe X20, et obture la chambre interne 36, vers l'avant.

Ainsi, la chambre interne 36 est séparée du conduit interne 32 par le chapeau 23, par les pattes de liaison 38, par la bride 54, par le bouchon 80 et par la première barrière d'étanchéité interposée entre les surfaces 233 et 545.

Un ressort 64 est monté dans le volume interne V52. Ce ressort 64 prend appui sur le fond d'un lamage du bouchon 80 et repousse le clapet 70 vers sa position avancée de fermeture de l'orifice 522.

Le clapet 70 comprend une tête 71 qui porte la gorge 72 et une jupe 73 qui s'étend vers l'arrière à partir de la tête 71, qui est ouverte vers l'arrière et qui définit un volume V73 dans lequel s'engage le ressort 64. Des orifices 76 traversent radialement la jupe 73 et mettent en communication le volume V73 avec la partie du volume interne V52 qui entoure radialement la jupe 73.

La surface périphérique externe de la jupe 73 est étagée et comprend une première section avant 732, qui présente un profil polygonal dont la plus grande dimension est égale au diamètre de la tête 71, et une deuxième section arrière 734 à section circulaire, de diamètre plus important que la dimension radiale maximale de la section avant 732, ces dimensions étant prises radialement à l'axe X50. Les orifices traversants 76 débouchent sur la première section avant 732.

D'autre part, une collerette interne 66 est ménagée à l'intérieur de l'embout 50, au niveau de la bride 54 et définit, sur son côté arrière, l'épaulement interne arrière 60. La surface radiale interne 662 de la collerette 66 est également à section circulaire et de même diamètre que la partie arrière 734 de la jupe 73 et définit un logement de réception de cette partie arrière 734 qui coopère avec le clapet 70 lorsque le clapet 70 est dans sa position reculée d'ouverture représentée à la figure 4. Ainsi, la collerette 66 définit un siège de réception du clapet 70 en configuration accouplée des éléments mâle et femelle 4 et 6 du raccord 2. Au voisinage de la collerette interne 66, l'embout 50 est pourvu de trois passages inclinés 68 qui relient le volume interne V52 de la partie tubulaire 52, donc le volume interne V50 de l'embout 50, au volume annulaire V54 situé entre les collerettes 542 et 544, donc au volume V20 disposé autour de la bride 54 et à la portion intermédiaire 326, en configuration installée de l'embout 50 sur le corps 20. Les passages 68 débouchent à l'extérieur de l'embout 50 sur la surface périphérique externe 541, c'est-à-dire, le long de l'axe X20, entre les barrières d'étanchéité formées par les joints 58 et 56 interposés entre les surfaces 233 et 545, d'une part, 283 et 543 d'autre part. Dans cet exemple, les passages 68 débouchent au niveau de la surface 550, c'est-à-dire dans le volume annulaire V54.

Les passages 68 débouchent dans le volume interne V50 de l'embout 50 en avant du bouchon 80 et en arrière du clapet 70, lorsque celui-ci est en position avancée de fermeture. La portion avant 324 et la portion intermédiaire 326 du conduit interne 32 communiquent fluidiquement à travers les passages 68.

Les trois passages 68 sont séparés par des ponts 69. Ces ponts 69 s'étendent partiellement, le long de l'axe X50, au niveau longitudinal de la collerette avant 542. Les surfaces latérales 692 des ponts 69 sont concaves.

On note $\beta 68$ l'amplitude angulaire d'un passage 68 autour de l'axe X50. Cette amplitude angulaire est comprise entre 60 et 100°, de préférence égale à 90°.

Chacun des passages 68 s'étend selon un axe A68 qui converge vers l'axe X50 vers l'avant et qui forme avec celui-ci un angle $\gamma 68$ compris entre 30 et 50°, de préférence égale à 40°.

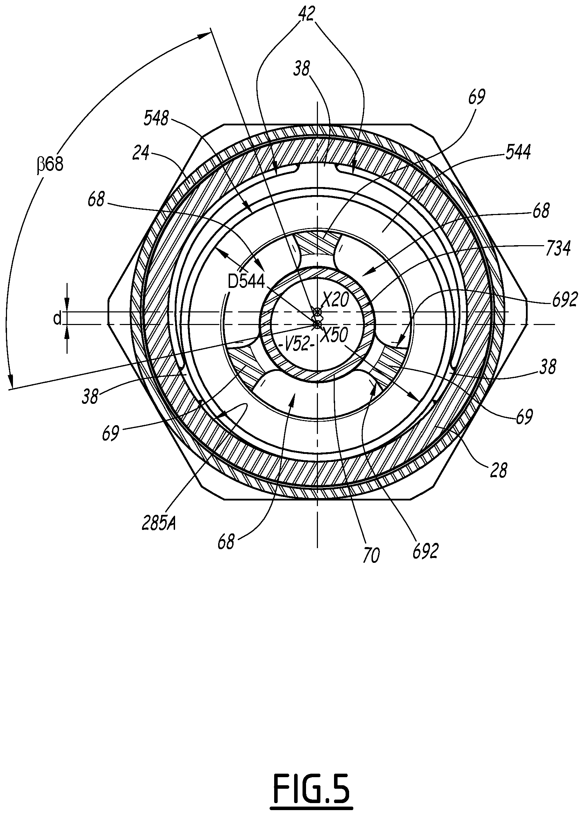

Les passages 68 ont une section, perpendiculaire à l'axe X50 et visible à la figure 5, qui est en forme de portion d'anneau centrée sur l'axe X50. En d'autres termes, ils s'étendent globalement de façon circonférentielle autour de l'axe X50, leur dimension circonférentielle étant supérieure à leur dimension radiale à l'axe X50 et à leur dimension longitudinale parallèle à l'axe X50 et visible aux figures 1, 2 et 4.

Dans l'exemple, trois passages 68 sont prévus à travers l'embout 50. Le nombre de passages 68 n'est pas limitatif. Il est supérieur ou égal à 1 et, en pratique, adapté en fonction du nombre de ponts 69.

Le diamètre du lamage du bouchon 80 est sensiblement égal au diamètre de la surface radiale interne 662 de la collerette 6. De préférence le rapport de ces diamètres est compris entre 0,9 et 1,1. Le diamètre de la surface radiale interne 662 est supérieur au diamètre de la surface radiale interne de la partie tubulaire 52 en avant des passages 68.

La surface périphérique interne 285 comprend une portion de surface avant 285A cylindrique à section circulaire dont on note D20 le diamètre puisque ce diamètre constitue le diamètre du volume V20 sur l'avant de ce volume. La surface périphérique interne 285 comprend une portion de surface arrière 285B qui est tronconique et divergente vers l'arrière à partir de la portion 285A. La portion de surface arrière 285B fait face radialement à la collerette arrière 544 ; en d'autres termes, les surfaces 285B et 548 sont alignées le long de l'axe X20. Le demi-angle de divergence de la portion de surface arrière 285B, noté $\delta 285$, est égal à 10°. En pratique, ce demi-angle au sommet peut être choisi entre 5 et 30°.

On note D'20 le diamètre maximum de la surface périphérique interne 285 qui est donc le diamètre maximum du volume de réception V20. Ce diamètre maximum D'20 est mesuré à l'extrémité arrière de la portion de surface arrière 285B.

Une possibilité de mouvement de débattement radial de l'embout 50 par rapport au corps 20, c'est-à-dire une possibilité de décalage entre les axes X20 et X50 qui demeurent parallèles, correspond au jeu radial existant entre la surface périphérique externe 541 de la bride 54 et la surface radiale interne qui délimite le volume V20, qui est ici formée par la surface périphérique interne 285.

Le diamètre D52 de la partie tubulaire 52 et le diamètre de l'orifice avant 286 sont choisis pour ne pas limiter le débattement de la bride 54 dans le volume V20.

La différence entre le diamètre D542 et le diamètre D20 est de l'ordre de 9% du diamètre D542. D'autre part, la différence entre le diamètre D544 et le diamètre D'20 est de l'ordre de 14% du diamètre D544. Ainsi, lors d'un débattement radial maximum de l'embout 50 à l'intérieur du volume V20, si la collerette avant 542 est en contact avec la surface périphérique interne 285, comme représenté en partie inférieure de la figure 4, un jeu radial périphérique J demeure autour de la collerette 544, en ce sens que la surface périphérique externe 548 n'est pas, même localement, au contact de la surface périphérique interne 285. Ce jeu J est donc annulaire. L'épaisseur radiale de ce jeu J, prise parallèlement au plan P20, est variable autour de l'axe X20 et présente une valeur minimale $e_{Jmin}$ qui est non nulle. Ceci provient du fait que le diamètre D'20 est supérieur au diamètre D20 de la portion de surface avant 285A, alors que les diamètres D542 et D544 sont égaux. Ceci permet le passage de fluide entre les portions 322 et 324 du conduit interne 32, à travers le jeu J ménagé dans la portion 326, autour de la collerette arrière 544 à la fois du côté où elle est le plus éloigné de la surface périphérique interne 285, comme représenté en partie supérieure de la figure 4, et du côté où elle est le plus proche de cette surface, comme représenté en partie inférieure de cette figure 4.

Ainsi, la bride 54 peut se déplacer, dans le volume V20 et parallèlement au plan radial P20, avec un débattement dont la valeur maximum d54 est égale à la différence entre le diamètre D20 et le diamètre D542. On a une relation exprimée par l'équation suivante :

$$d54 = D20\text{-}D542 \qquad\qquad\qquad\qquad (\text{équation 1})$$

Cette valeur maximum de débattement est choisie supérieure ou égale à 0,75 mm, de préférence égale à 2,1 mm, pour un élément de raccord dont le diamètre D52 est égal à 15 mm. Ainsi le rapport d54/D52 est compris entre 0,1 et 0,16, de préférence égal à 0,14.

La collerette avant 542 présente, du côté du volume annulaire V54 un bord tronqué qui définit un chanfrein tronconique 552 dont le demi-angle au sommet est égal à 45°. D'autre part, la collerette arrière 544 présente, du côté du volume annulaire V54 un bord tronqué qui définit un chanfrein 554 dont le demi-angle au sommet par rapport à l'axe X50 est égal à 30°. Ce chanfrein 554 relie la surface périphérique externe 548 et la surface annulaire avant 556 de la collerette arrière 544. Le chanfrein 554 a une longueur parallèle à l'axe X50 et une largeur radiale perpendiculaire à cet axe supérieures respectivement à la longueur axiale et à la largeur radiale du chanfrein 552. Le chanfrein 554 facilite l'écoulement de fluide autour de la collerette arrière 544, en minimisant les pertes de charge.

L'élément femelle 6 du raccord est vissé dans une plaque 10 qui délimite une canalisation C10 de circulation de fluide.

L'élément femelle 6 comprend un corps monobloc 120 pourvu d'un filetage externe 122 vissé dans un taraudage de forme correspondante 102 situé sur la périphérie d'un perçage P10 ménagé dans la plaque 10. Un joint 130 est interposé entre le corps 120 et le perçage P10.

Le corps 120 s'étend le long d'un axe longitudinal X120. On définit un côté avant 6A de l'élément de raccord femelle 6, qui est orienté vers l'élément 4 au début de l'accouplement, soit tourné dans le sens d'emmanchement selon l'axe longitudinal X120, et un côté arrière 6B de cet élément de raccord, qui est orienté à l'opposé du côté avant 6A et est tourné vers la canalisation C10.

Un poussoir fixe 121 est immobilisé longitudinalement dans le corps tubulaire 120 au moyen d'un segment d'arrêt 123 formé par un circlip.

Un clapet 170 est installé autour du poussoir 121 et entoure une tête avant 125 du poussoir dans une configuration où le clapet 170 obture un conduit interne 132 de circulation de fluide à l'intérieur de l'élément femelle du raccord. Le clapet 170 peut également être qualifié de « tiroir ».

Un joint 174 est monté dans une gorge 172 ménagée sur une surface périphérique interne du corps 120 autour de la tête 125, alors qu'un autre joint 194 est monté dans une gorge périphérique externe 192 de la tête 125. Lorsque le clapet 170 obture le conduit interne 132, les joints 174 et 194 sont respectivement en appui contre une surface périphérique externe et une surface périphérique interne de ce clapet.

Un ressort 164 est disposé dans le volume interne du corps 120. Il prend appui contre un pied 127 du poussoir 121 et repousse le clapet 170 vers sa position d'obturation du conduit 132.

Le clapet 170 est mobile longitudinalement, le long de l'axe X20, entre la configuration représentée aux figures 2 et 3, où il est en position avancée de fermeture et obture un orifice annulaire avant 152 du corps 120, et une position reculée d'ouverture représentée à la figure 4, où il autorise le passage de fluide dans le conduit interne 132.

L'extrémité avant du corps 120 forme une embouchure divergente vers l'avant dont la surface interne 154 est tronconique et présente un demi-angle au sommet η154 compris entre 20 et 45°, de préférence égal à 30°. La surface tronconique 154 est disposée en avant du clapet 170 en position avancée de fermeture.

On note e154 l'épaisseur radiale de la surface 154, cette épaisseur étant mesurée selon une direction radiale à l'axe X120. Cette épaisseur radiale e154 est choisie supérieure à la valeur maximum d54 du débattement de la bride 54 dans le volume V20. En d'autres termes, on a une relation exprimée par l'équation suivante :

$$e154 > d54 \hspace{5cm} (\text{équation 2})$$

Lors de l'accouplement, les éléments mâle et femelle 4 et 6 sont rapprochés en alignant approximativement les axes X20 et X120 de leur corps respectifs 20 et 120. On fait l'hypothèse que la bride 54 de l'embout 50 est alors centrée dans le volume V20, c'est-à-dire que les axes X20 et X50 sont alignés. Ceci n'est toutefois pas obligatoire.

En cas de désalignement entre l'axe X50 et l'axe X120, l'arête 524 vient au contact de la surface tronconique 154 de l'embouchure du corps femelle 120 et la progression des éléments mâle et femelle l'un vers l'autre, dans un sens de rapprochement ou d'emmanchement parallèle à l'axe X20 et représenté par les flèches F1 à la figure 3, a pour effet de faire glisser l'arête 524 le long de la surface 154 de façon à aligner les axes X50 et X120, alors même que les axes X20 et X120 demeurent parallèles mais non alignés. Ceci est possible grâce à un déplacement de l'embout 50 par rapport au corps 20, au moyen du débattement de la bride 54 à l'intérieur du volume V20, c'est-à-dire d'un déplacement parallèle au plan radial P20, ce qui a lieu, dans l'exemple des figures, lors du passage de la configuration de la figure 3 à la configuration de la figure 4. Ce mouvement de débattement se produit, sur toute son amplitude, avec un contact glissant étanche entre la face avant 233 du corps 20 et la surface arrière 545 de la bride 54, par l'intermédiaire du joint 58, et avec un contact glissant étanche entre la face arrière 283 du corps 20 et la surface avant 543 de la bride 54, par l'intermédiaire du joint 56. Le joint 58 assure donc la fonction d'étanchéité entre la bride 54 et la face avant 233 au cours du mouvement de débattement de la bride 54 dans le corps 20. Le joint 56 assure donc la fonction d'étanchéité entre la bride 54 et la face arrière 283 au cours du mouvement de débattement de la bride 54 dans le corps 20.

Lors de ce débattement, et contrairement à ce qui se produit avec le matériel de US-A-3 508 580, même si le conduit interne 32 de l'élément mâle 4 est rempli de fluide sous pression, par exemple du fréon à une pression de 15 bars, les efforts de déplacement de la collerette 54 dans le volume V20 ne doivent pas contrer les efforts générés par la pression du fluide dans le conduit interne 32. En effet, les effets des différences de pression qui s'appliquent sur l'embout 50 de part et d'autre de la première barrière d'étanchéité, interposée entre les surfaces 233 et 545, et de part et d'autre de la deuxième barrière d'étanchéité, interposée entre les surfaces 283 et 543, tendent à s'équilibrer, c'est-à-dire à s'annuler, car les sections d'étanchéité S1 et S2 délimitées respectivement par les première et deuxième barrières d'étanchéité sont d'aires égales, dont on note respectivement A1 et A2 les aires.

Lorsque les sections d'étanchéité ont des aires de valeurs voisines, notamment des valeurs qui diffèrent de moins de 15%, c'est-à-dire lorsque le rapport A2/A12 des aires des sections d'étanchéité S2 et S1 est compris entre 0,85 et 1,15, les effets des différences de pression qui s'appliquent sur l'embout 50 de part et d'autre des première et deuxième barrières d'étanchéité sont fortement diminués. Des résultats particulièrement satisfaisants sont obtenus lorsque le rapport A2/A1 est compris entre 0,95 et 1,05, la valeur 1 restant préférentielle pour ce rapport.

Ainsi, lorsque le clapet 70 est en position avancée de fermeture où il obture l'élément de raccord mâle 4, le débattement de l'embout 50 par rapport au corps 20 peut avoir lieu sans devoir vaincre des efforts de pression importants. Ceci permet de réduire les efforts exercés par l'arête 524 sur la surface interne 154 et permet d'éviter un matage localisé de la surface interne 154 et de l'arête 524. L'effort exercé pour accoupler les éléments 4 et 6 est diminué, alors que l'étanchéité est assurée en permanence.

L'équilibrage des pressions au niveau de la bride 54 provient également du fait que les deux barrières d'étanchéité réalisent une étanchéité avec la même différence de pression, c'est-à-dire avec la différence de pression entre la pression interne au volume V20 et la pression atmosphérique externe, puisque la chambre interne 36 est à la pression atmosphérique externe à travers les évents 40.

Les évents permettent de maintenir la chambre interne 36 à une pression proche ou égale de la pression atmosphérique en cas de fuite à travers la première barrière d'étanchéité. En pratique, les évents 40 ne sont utiles qu'en cas de fuite à travers la première barrière d'étanchéité puisque, au montage, la chambre d'étanchéité 36 est à la même pression atmosphérique que l'extérieur de l'élément de raccord 4

Lorsque l'axe X50 est aligné sur l'axe X120, la face avant de la tête 71 entre en contact avec la face avant de la tête 125 et la face avant du clapet 170 entre en contact avec la face avant 526 de la partie tubulaire 52. La poursuite du mouvement longitudinal d'emmanchement parallèle à l'axe longitudinal X20, dans le sens d'emmanchement des flèches F1, provoque le déplacement des clapets 70 et 170 vers leurs positions d'ouverture respectives, à l'encontre de l'action des ressorts 64 et 164. Ce mouvement a pour effet d'amener la partie arrière 734 de la jupe 73 du clapet 70 dans le siège de forme complémentaire défini par la surface radiale interne 662 de la collerette interne 66. Les orifices traversants 76 permettent d'évacuer le fluide sous pression du volume V73, ce qui évite qu'une augmentation de pression dans ce volume ne bloque ou ne ralentisse le déplacement du clapet 70 vers sa position d'ouverture. La surface radiale interne 662 participe au guidage du clapet 70 à la fin de sa course de déplacement à l'accouplement, de sa position de fermeture vers sa position d'ouverture.

En configuration accouplée, le raccord 2 joint les deux canalisations C8 et C10. le fluide peut alors circuler entre les canalisations C8 et C10, à travers les conduits internes 32 et 132, comme représenté par les flèches F2 à la figure 4. En particulier, le fluide sous pression provenant de la canalisation C8 s'écoule dans la sous-portion 322A cylindrique et axiale de la portion arrière 322 du conduit interne 32, puis dans la sous-portion annulaire divergente 322B de la portion 322, jusqu'à ce qu'il traverse les lumières 42 et pénètre longitudinalement dans la partie du volume V20 qui entoure la bride 54, laquelle partie constitue la portion intermédiaire 326 du conduit interne 32. Le fluide ressort de la portion intermédiaire 326 à travers les passages 68, en pénétrant dans la portion avant 324 du conduit 32 dans la partie tubulaire 52, où il circule en entourant le clapet 70 et la partie avant du poussoir 121, jusqu'à traverser le clapet 170 et ressortir dans le conduit 132 de l'élément de raccord femelle 6, puis atteindre la canalisation C10 à travers le pied 127 du poussoir 121.

La configuration accouplée du raccord 2, qui est représentée aux figures 4 à 6, est obtenue grâce à un déplacement essentiellement longitudinal des plaques 8 et 10 l'une vers l'autre, alors qu'un possible désalignement entre les axes X20 et X120 au début du mouvement d'emmanchement est toléré. En effet, dès le début de l'accouplement et en position accouplée des éléments 4 et 6, un décalage radial d peut exister entre les axes X20 et X120, sans que cela ne perturbe le passage de la configuration désaccouplée à la configuration accouplée ni le fonctionnement du raccord.

Comme l'épaisseur e154 est supérieure à la valeur maximum d54 du débattement, la partie avant de l'embout 50 a toutes les chances de se retrouver en regard de la surface tronconique 154 de l'embouchure de l'élément femelle lors du mouvement d'approche relatif des plaques 8 et 10. Ceci sécurise les opérations d'accouplement des éléments 4 et 6.

Lorsque le désalignement entre les axes X20 et X120 est maximal en début d'emmanchement, l'embout 50 se déplace perpendiculairement à l'axe X20, au sein du corps 20, jusqu'à ce que la collerette avant 542 vienne en appui contre la surface périphérique interne 285 du corps mâle définie par le couvercle 28. Dans cette position représentée à la figure 4, le fluide peut passer dans les trois lumières 42 et les pertes de charge générées sont minimisées du fait du caractère tronconique de la portion de surface arrière 285B et de l'existence du chanfrein 554.

Dans l'exemple des figures, l'amplitude du décalage radial d dans la configuration des figures 4 à 6 est égale à la moitié de la valeur maximum d54 de débattement car la bride 54 est en appui contre la surface périphérique interne 285 du logement formé par le volume V20. Ceci constitue un cas limite. En pratique, l'amplitude du décalage radial d est inférieure ou égale à la moitié de la valeur maximum d54.

La première portion arrière 322, la deuxième portion avant 324 et la troisième portion intermédiaire 326 sont en permanence en communication fluidique, que ce soit en configuration désaccouplée, en configuration accouplée ou en cours d'accouplement de l'élément de raccord 4.

Pour le désaccouplement du raccord 2, les éléments 4 et 6 sont éloignés selon l'axe longitudinal X20 dans un sens de désaccouplement opposé aux flèches F1, ce qui provoque la fermeture des clapets 70 et 170 et le désengagement de l'embout 50 hors du corps 120. La position radiale de l'embout 50 dans le volume interne V20 n'est pas modifiée lors de cette phase de désaccouplement.

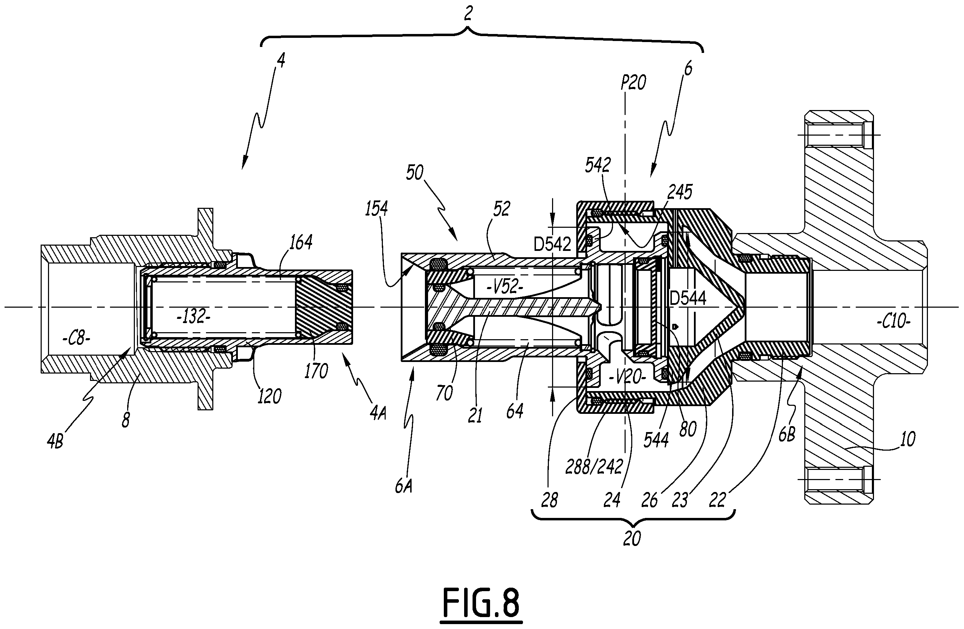

Dans les deuxième à quatrième modes de réalisation représentés sur les figures 8 et suivantes, les éléments analogues à ceux du premier mode de réalisation portent les mêmes références. Si une référence est utilisée sur l'une de ces figures sans être mentionnée dans la description, elle correspond à l'élément portant la même référence dans le premier mode de réalisation. A l'inverse, si une référence est utilisée dans la description sans être représentée sur les figures 8 à 11, elle correspond à l'élément portant la même référence dans le premier mode de réalisation.

Dans ce qui suit, on décrit principalement ce qui distingue les deuxième à quatrième modes de réalisation du premier mode de réalisation.

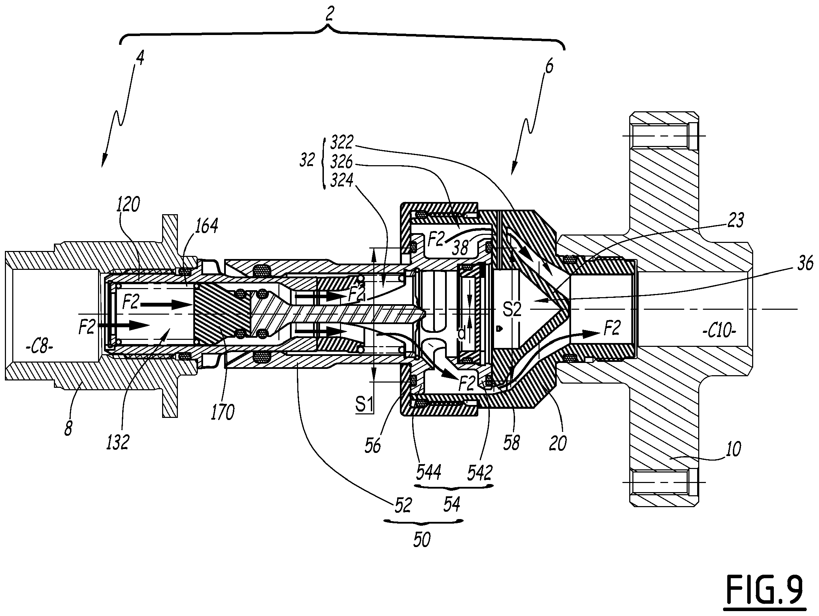

Dans le deuxième mode de réalisation des figures 8 et 9, l'élément mâle 4 est classique, avec un corps 120 monté sur un support 8 qui définit une canalisation C8 et un clapet 170 coulissant à l'intérieur du corps 120 et poussé en position de fermeture par un ressort 164. L'élément mâle 4 est complémentaire de l'élément femelle 6.

L'élément femelle 6 comprend un embout 50 équipé de deux collerettes 542 et 544 qui appartiennent à une bride 54 disposée dans un volume interne V20 du corps 20. Dans ce mode de réalisation, l'invention est mise en oeuvre dans l'élément femelle 6 du raccord.

L'élément femelle comprend également un clapet 70, de forme annulaire et monté coulissant autour d'un poussoir 21 de l'embout 50, dans le volume interne V52 d'une partie tubulaire avant 52 de l'embout 50. Le poussoir 21 est monté dans le volume interne V52 de la partie tubulaire 52, sans possibilité de mouvement axial par rapport à la partie tubulaire 52. En position avancée de fermeture, le clapet 70 coopère de manière étanche avec le poussoir 21 et avec la partie tubulaire 52 pour obturer l'orifice avant 522 de la partie tubulaire 52. La surface tronconique 154 est disposée en avant du clapet 70 en position avancée de fermeture. En position reculée d'ouverture, le clapet 70 autorise le passage de fluide dans le conduit interne 32. Un ressort 64 repousse le clapet 70 vers sa position de fermeture.

Ici, le couvercle 28 est vissé non pas sur l'intérieur de la jupe 24 mais sur l'extérieur de celle-ci. A cet effet, le couvercle 28 est équipé d'un taraudage interne 288, alors que la jupe 24 est équipé d'un filetage externe 242. La surface périphérique interne du corps 20 délimitant vers l'extérieur le volume interne V20, défini comme dans le premier mode de réalisation, est donc ici constituée par la surface radiale interne 245 de la jupe 24, qui a un diamètre constant sur toute sa longueur.

En outre, dans cet exemple, les diamètres externes D542 et D544 des deux collerettes 542 et 544 sont différents. En effet, le diamètre externe D544 de la collerette arrière 544 est inférieur au diamètre externe D542 de la collerette avant 542, ceci afin de libérer le plus possible d'espace autour de la collerette 544 pour le passage du fluide en configuration accouplée du raccord 2, quelle que soit la position de l'embout 50 dans le volume interne V20, pour que le fluide puisse s'écouler jusque dans une canalisation C10 définie par un support 10 sur lequel est vissé le corps 20 de l'élément femelle 6.

Comme dans le premier mode de réalisation, les deux joints 56 et 58 disposés à l'interface entre la bride 54 et le corps 20 définissent deux barrières d'étanchéité dont les sections d'étanchéité S1 et S2 sont d'aires A1 et A2 identiques. Comme dans le premier mode de réalisation, le mouvement de débattement de l'embout 50 par rapport au corps 20 se produit avec le contact glissant étanche entre la face avant définie par le chapeau 23 et la surface arrière de la bride 54, par l'intermédiaire du joint 58, et avec le contact glissant étanche entre la face arrière du couvercle 28 et la surface avant de la bride 54, par l'intermédiaire du joint 56. Comme dans le premier mode de réalisation également, l'épaisseur axiale des pattes de liaison 38 est inférieure à la longueur axiale du chapeau 23 qui délimite la chambre interne 36.

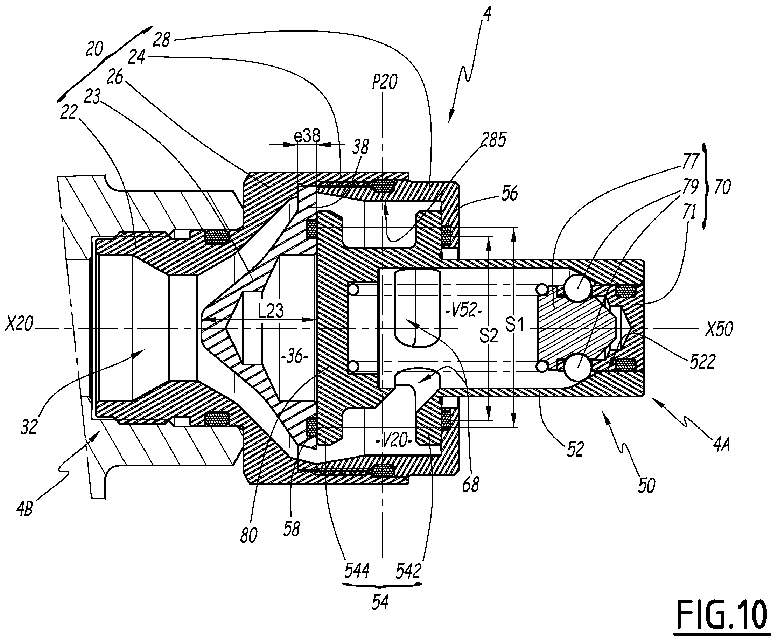

Dans le troisième mode de réalisation représenté à la figure 10, le bouchon 80 est monobloc avec la collerette arrière 544 et obture ainsi sur l'arrière la deuxième portion 324 du conduit interne 32.

En outre, le clapet 70 est tripartite, avec une tête 71, une partie arrière 77 et des billes 79, afin d'être monté dans le volume V52 par l'avant de l'embout 50, à travers l'orifice avant 522 de la partie tubulaire 52. Il était ici fait usage de l'enseignement technique de EP-A-3 301 341 dont l'enseignement technique est incorporé par référence.

Ici, le chapeau 23 et les pattes de liaison 38 constituent ensemble une pièce monobloc mais ne sont pas monoblocs avec le reste du corps 20, mais rapportés sur la pièce constitutive monobloc des parties 22, 24 et 26, à la jonction entre les parties 24 et 26. En outre, il n'est pas prévu d'évent reliant la chambre interne 36 à l'extérieur de l'élément de raccord 4, en faisant l'hypothèse que les fuites à travers la première barrière d'étanchéité sont inexistantes.

Dans ce mode de réalisation, la forme conique du chapeau interne 23 est optionnelle. En effet, la chambre interne 36 peut être délimitée entre la face avant 233 du chapeau 23 qui est alors en forme de disque autour de l'axe X20 et qui fait face axialement au bouchon 80. Cette chambre interne 36 reste séparée du conduit interne 32 par le chapeau 23, par la bride 54, par le bouchon 80 et par la première barrière d'étanchéité 58 de section d'étanchéité S1.

Dans ce mode de réalisation, les sections d'étanchéité S1 et S2 ne sont pas d'aires égales, la section d'étanchéité S2 délimitée par le joint 56 à l'avant de la bride 54 ayant une aire A2 inférieure à l'aire A1 de la section d'étanchéité S1 délimitée par le joint 58 à l'arrière de la bride 54. La différence de ces sections d'étanchéité S1 et S2, c'est-à-dire en pratique la différence des aires A1 et A2 des surfaces axiales fictives en forme de disques entourées par les joints 56 et 58, est choisie suffisamment faible pour rester compatible avec des efforts relativement modestes à fournir pour déplacer la bride 54 formée des collerettes 542 et 544 à l'intérieur du volume V20, parallèlement au plan radial P20 lors de l'accouplement.

En pratique, dans ce mode de réalisation comme dans les autres, l'effort maximum de désalignement à fournir peut être fixé à environ 30 daN. L'effort maximum à exercer dépend non seulement des sections d'étanchéité S1 et S2 mais également de la pression du fluide à l'intérieur du conduit interne 32 de l'élément de raccord 4. Dans l'exemple de la figure 10, la différence des sections d'étanchéité est d'environ 7%, ce qui donne de bons résultats. En pratique, des résultats satisfaisants sont obtenus pour un rapport S2/S1 supérieur ou égal à 0,85, c'est-à-dire une différence de sections d'étanchéité de 15%.

En variante non représentée de l'invention, la section d'étanchéité S1 à l'arrière de la bride 54 est d'aire A1 inférieure à l'aire A2 de la section d'étanchéité S2 à l'avant de la bride 54. Dans ce cas également, en pratique, le rapport A1/A2 est choisi supérieur ou égal à 0,85.

Dans ce troisième mode de réalisation, les joints 56 et 58 sont disposés dans des gorges ménagées respectivement dans le couvercle 28 et dans le chapeau 23, c'est-à-dire sur des parties du corps 20, et non pas sur des parties de la bride 54, comme dans les autres modes de réalisation. En outre, les joints 56 et 58 ne sont pas des joints toriques, comme dans les autres modes de réalisation, mais il s'agit de joints plats à section rectangulaire.

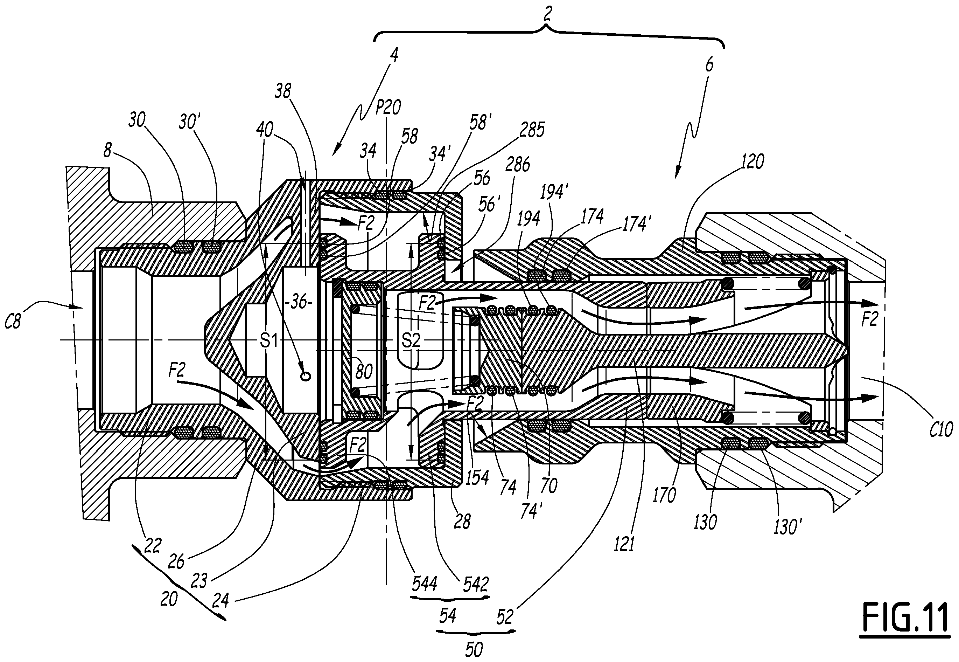

Dans le quatrième mode de réalisation représenté à la figure 11, les évents 40 qui relient la chambre interne 36 à l'extérieur de l'élément mâle 4 sont cylindriques à section circulaire et non pas à section polygonale.

En outre, les différents joints d'étanchéité sont disposés par paire afin de créer une première et une deuxième barrières d'étanchéité à double joints. Tel est en particulier le cas pour les joints 56 et 56' disposés dans deux gorges concentriques formées sur la collerette avant 542 et pour les joints 58 et 58' disposés dans deux gorges concentriques formées sur la collerette arrière 544, les collerettes 542 et 544 constituant la bride 54 comme dans le premier mode de réalisation. Dans ce cas, la première barrière d'étanchéité est formée par les deux joints 58 et 58' qui sont tous deux en contact avec la bride 54 et la face avant 233 du corps 20 et la deuxième barrière d'étanchéité est formée par les deux joints 56 et 56' qui sont tous deux en contact avec la bride 54 et la face arrière 283 du corps 20. Dans ce cas, les sections d'étanchéité S1 et S2 associées aux deux barrières d'étanchéité sont délimitées par les joints les plus externes, c'est-à-dire par les joints 56 et 58 présentant un diamètre plus important que les joints 56' et 58' et donc délimitant le conduit interne 32.

Les joints 30, 34, 72, 130, 174 et 194 du premier mode de réalisation sont ici remplacés par des paires de joints 30 et 30', 34 et 34', 74 et 74', 130 et 130', 174 et 174', 194 et 194'.

En variante, seuls certains de ces joints sont remplacés par des paires de joints.

Selon une variante, non représentée et applicable à tous les modes de réalisation, la bride 54 ne présente pas deux collerettes 542 et 544 entre lesquelles est défini un volume périphérique V54, mais présente un diamètre externe constant sur toute sa longueur.

Selon une autre variante, non représentée et applicable à tous les modes de réalisation, la bride présente deux collerettes adjacentes de diamètres différents, sans que soit ménagé entre elles un volume comparable au volume V54.

Selon une autre variante, non représentée et applicable à tous les modes de réalisation, chacun des passages 68 s'étend selon un axe A68 qui est radial à l'axe X50.

Selon une autre variante, non représentée et applicable à tous les modes de réalisation, le chapeau 23 est centré sur un axe parallèle et décalé vis-à-vis de l'axe central longitudinal X20.

Quel que soit le mode de réalisation de l'invention, l'invention présente l'avantage de réduire un déséquilibre de pression appliqué sur l'embout 50, au niveau de sa bride 54, ce qui facilite les déplacements de la bride 54 à l'intérieur du volume V20 parallèlement au plan radial P20, y compris lorsqu'un fluide sous pression est présent dans le conduit interne 32, en configuration de fermeture du clapet 70. Les barrières d'étanchéité qui isolent respectivement le volume V20 de réception de la bride 54 vis-à-vis de la pression atmosphérique, du côté avant de l'embout 50 et du côté de la chambre d'étanchéité 36, permettent d'équilibrer ou de compenser dans une large mesure les efforts exercés sur l'embout 50 par le fluide sous pression présent dans le conduit interne 32, ce qui permet d'optimiser les efforts d'accouplement.

La géométrie des différents passages constitués notamment par les lumières 42 et les passages 68 ainsi que la géométrie des pattes de liaison 38 et des ponts 69 est optimisée pour limiter les pertes de charge.

Lorsqu'ils sont présents, les évents 40 garantissent que la chambre interne 36 est maintenue à la pression atmosphérique, y compris en cas de fuite au niveau de la première barrière d'étanchéité.

Dans les premier, deuxième et quatrième modes de réalisation, le corps de l'élément de raccord n'est formé que de deux parties, à savoir la partie monobloc comprenant les portions 22, 23, 24 et 26, d'une part, et le couvercle 28 rapporté sur cette partie monobloc, ce qui réduit le besoin en joints d'étanchéité.

Dans les premier, troisième et quatrième modes de réalisation, le caractère divergeant vers l'arrière de la surface périphérique interne 285 du couvercle facilite la création du jeu J annulaire d'épaisseur radiale minimale $e_{Jmin}$ non nulle. Ceci peut, en variante non représentée, être mis en oeuvre au niveau de la surface périphérique interne 245 de la jupe 24, lorsqu'elle est utilisée pour délimiter radialement le volume V20, comme dans le deuxième mode de réalisation.

La géométrie des collerettes 542 et 544, d'une part, et du volume interne V20 de réception de la bride 54 sont optimisés pour faciliter le passage de fluide tout autour de la collerette arrière 544, avec des pertes de charge minimales, même en configuration de débattement radial maximal de l'embout 50 vis-à-vis du corps mâle 20.

La géométrie interne de l'embout 50 est optimisée, en particulier au niveau de la collerette interne 66 du bouchon 80 rapporté sur, ou monobloc avec, l'embout pour limiter les pertes de charge et guider radialement le clapet 70 en position d'ouverture.

Dans les premier, deuxième et quatrième modes de réalisation, l'utilisation d'un bouchon 80 rapporté permet de monter le clapet 70 dans l'embout 50 par l'arrière. Compte tenu du type du clapet 70, ceci n'est pas indispensable dans le troisième mode de réalisation.

L'invention est applicable indépendamment de la nature du fluide qui traverse le raccord, qu'il soit liquide ou gazeux, et du sens de circulation de ce fluide dans le raccord.

L'invention est applicable indépendamment de la nature exacte des barrières d'étanchéité. En variante non représentée, les joints toriques 56 et 58 de ces barrières d'étanchéité sont remplacés par des joints à lèvres, éventuellement énergisés par ressort.

L'invention est représentée sur les figures dans le cas où un seul des éléments 4 et 6 du raccord 2 est conforme à l'invention. En variante, ces deux éléments sont conformes à l'invention.

Quel que soit le mode de réalisation, les barrières d'étanchéité sont compatibles avec le mouvement de la bride 54 à l'intérieur du volume V20, c'est-à-dire avec le débattement de la bride, sans perte d'étanchéité au niveau des joints 56 et 58 ou 56 et 56' et 58 et 58'.

Quel que soit le mode de réalisation, en variante, le plan radial P20 parallèlement auquel la bride 54 peut se déplacer dans le logement formé par le volume V20 peut ne pas être perpendiculaire à l'axe X20, mais incliné par rapport à cet axe. Ainsi le plan radial P20 forme un angle de 75° à 105° par rapport à l'axe X20. Les directions radiales et surfaces radiales ou périphériques sont adaptées en conséquence.

Les modes de réalisation et variantes envisagés ci-dessus peuvent être combinés pour générer de nouveaux modes de réalisation de l'invention définie par les revendications.

**Revendications**

1. Elément (4, 6) mâle ou femelle de raccord (2) fluidique, conçu pour la jonction de canalisations (C8, C10) de fluide sous pression,

   - cet élément de raccord comprenant un corps (20), un embout (50) et un clapet (70);
   - le corps s'étendant selon un axe longitudinal (X20), entre un côté avant (4A, 6A) tourné dans un sens d'emmanchement de l'élément de raccord avec un élément complémentaire du raccord et un côté arrière (4B, 6B) opposé au côté avant ;
   - le corps délimitant, d'une part, un logement (V20) de réception partielle de l'embout (50) et, d'autre part, au moins une première portion (322) d'un conduit interne (32) de circulation de fluide dans l'élément de raccord, la première portion (322) étant disposée en arrière par rapport au logement de réception (V20) et communiquant fluidiquement avec le logement de réception (V20);
   - l'embout comprenant une partie tubulaire (52) dépassant vers l'avant hors du corps (20) ;
   - une deuxième portion (324) du conduit interne (32) étant ménagée dans un volume interne (V50) de l'embout et délimitée sur l'avant par un orifice avant (522) de la partie tubulaire (52) ;
   - le clapet (70) étant logé dans le volume interne (V50) de l'embout avec possibilité de mouvement entre une position avancée de fermeture où le clapet obture l'orifice avant (522) de la partie tubulaire (52) et une position reculée d'ouverture où le clapet ne s'oppose pas à la circulation de fluide dans le conduit interne (32) ;
   - l'embout (50) étant équipé d'une bride (54) formée en saillie externe et en arrière par rapport à la partie tubulaire (52), la bride (54) étant reçue dans le logement de réception (V20) avec possibilité de mouvement par rapport au corps (20) uniquement parallèlement à un plan (P20) radial à l'axe longitudinal (X20) ; et
   - une première barrière d'étanchéité formée d'au moins un joint d'étanchéité (58 ; 58, 58') étant interposée entre une surface arrière (545) de la bride (54) et une face avant (233) du corps (20), cette face avant (233) délimitant sur l'arrière le logement de réception (V20) et étant disposée en regard de la surface arrière de la bride (54), **caractérisé en ce que**
   - une deuxième barrière d'étanchéité formée d'au moins un joint d'étanchéité (56 ; 56, 56') est interposée entre une surface avant (543) de la bride et une face arrière (283) du corps (20), cette face arrière délimitant sur l'avant le logement de réception (V20) et étant disposée en regard de la surface avant de la bride (54);
   - une troisième portion (326) du conduit interne (32), intermédiaire entre la première portion (322) et la deuxième portion (324), est délimitée radialement autour de la bride (54), entre une surface périphérique externe (541) de la bride (54) et une surface périphérique interne (245 ; 285) du corps délimitant le logement de réception (V20) radialement à l'axe longitudinal (X20) ;
   - un bouchon (80) obture sur l'arrière la deuxième portion (324) du conduit interne (32) ;
   - les deuxième et troisième portions (324, 326) du conduit interne (32) communiquent fluidiquement par au moins un passage (68) ménagé dans l'embout (50) et qui débouche dans le volume interne (V50) de l'embout (50), en avant du bouchon (80), et sur la surface périphérique externe (541) de la bride ; et
   - une chambre interne (36) est ménagée dans l'élément de raccord (4, 6) et séparée du conduit interne (32) par le corps (20), par la bride (54), par le bouchon (80) et par la première barrière d'étanchéité (58 ; 58, 58').

2. Elément de raccord selon la revendication 1, **caractérisé en ce qu'**un rapport (A2/A1) entre une aire (A2) d'une section d'étanchéité (S2) délimitée par la deuxième barrière d'étanchéité et une aire (A1) d'une section d'étanchéité (S1) délimitée par la première barrière d'étanchéité est compris entre 0,85 et 1,15, de préférence entre 0,95 et 1,05, de préférence encore égal à 1.

**3.** Elément de raccord selon l'une des revendications précédentes, **caractérisé en ce qu'**au moins un évent (40) relie la chambre interne (36) à l'extérieur de l'élément de raccord et s'étend à travers le corps (20), de préférence parallèlement au plan radial (P20).

**4.** Elément de raccord selon l'une des revendications précédentes, **caractérisé en ce que** la chambre interne (36) est délimitée par une partie interne (23) du corps (20), de forme tronconique centrée sur un axe parallèle à l'axe longitudinal (X20), convergente vers l'arrière de l'élément de raccord, et qui est reliée à une portion intermédiaire (26) du corps disposée autour de la partie interne (23) par au moins une patte de liaison (38), **en ce que** la première portion (322) du conduit interne s'étend entre la partie interne (23) et la portion intermédiaire (26) du corps et **en ce que** le logement de réception (V20) débouche vers l'arrière dans la première portion (322) du conduit interne (32).

**5.** Elément de raccord selon la revendication 4, **caractérisé en ce qu'**un rapport (e38/L23) entre une épaisseur (e38) d'une patte de liaison, mesurée parallèlement à l'axe longitudinal (X20) du corps (20), et une longueur (L23) de la partie interne (23) du corps, mesurée selon le même axe longitudinal, est strictement inférieur à 1, de préférence compris entre 0,15 et 0,40, de préférence encore égal à 0,25.

**6.** Elément de raccord selon l'une des revendications 4 ou 5, **caractérisé en ce que** la partie interne (23) du corps délimitant la chambre interne (36), la ou les pattes de liaison (38) et la portion intermédiaire (26) du corps (20) forment ensemble une pièce monobloc.

**7.** Elément de raccord selon l'une des revendications précédentes, **caractérisé en ce que** la bride (54) comprend une collerette avant (542) formant la surface avant (543) de la bride et une collerette arrière (544) formant la surface arrière (545) de la bride, **en ce que** lorsqu'une surface périphérique externe (546) de la collerette avant est radialement en contact avec la surface périphérique interne (285 ; 245) du corps délimitant radialement le volume de réception (V20) , un jeu (J) annulaire d'épaisseur radiale minimale ($e_{Jmin}$) non nulle existe entre une surface périphérique externe (548) de la collerette arrière (544) et la surface périphérique interne (285 ; 245) du corps et **en ce que** les première et deuxième portions (322, 324) du conduit interne (32) sont en communication fluidique à travers le jeu (J) annulaire.

**8.** Elément de raccord selon la revendication 7, **caractérisé en ce que** le corps (20) comprend un couvercle (28), rapporté dans une jupe (24) du corps et qui définit un orifice avant (286) du corps à travers lequel la partie tubulaire (52) de l'embout (50) dépasse hors du corps (20) vers l'avant, **en ce que** la deuxième barrière d'étanchéité (56) est interposée entre une surface avant (543) de la collerette avant (542) et une face arrière (283) du couvercle qui entoure l'orifice avant, **en ce que** la surface périphérique interne (285) du corps est formée sur le couvercle (28), **en ce qu'**une portion de surface arrière (285B) de la surface périphérique interne (285) est évasée vers l'arrière et fait face radialement à la surface périphérique externe (548) de la collerette arrière (544) et **en ce que** les surfaces périphériques externes (546, 548) des collerettes avant et arrière (542, 544) sont cylindriques à section externe circulaire, de même diamètre externe (D542, D544), et coaxiales.

**9.** Elément de raccord selon l'une des revendications précédentes, **caractérisé en ce que** la surface arrière (545) et la surface avant (543) de la bride (54) sont des surfaces axiales planes et **en ce que** chaque joint d'étanchéité (58 ; 58, 58') formant la première barrière d'étanchéité et chaque joint d'étanchéité (56 ; 56, 56') formant la deuxième barrière d'étanchéité est logé dans une gorge (549) ménagée sur la surface arrière (545) de la bride (54), respectivement dans une gorge (547) ménagée sur la surface avant (543) de la bride.

**10.** Elément de raccord selon l'une des revendications précédentes, **caractérisé en ce que** le bouchon (80) est une pièce rapportée sur l'embout (50), montée de façon étanche dans le volume interne (V50) de l'embout en regard d'un épaulement interne arrière (60) de l'embout.

**11.** Elément de raccord selon l'une des revendications précédentes, **caractérisé en ce que** le clapet (70) est équipé d'une jupe (73) ouverte vers l'arrière, **en ce que** la jupe du clapet (70) est percée d'orifices traversants (76) qui débouchent sur une surface périphérique externe du clapet (70) et **en ce que** l'embout (50) délimite une surface interne (662) apte à coopérer radialement avec le clapet, en arrière des orifices traversants, lorsque le clapet est en position reculée d'ouverture.

**12.** Elément de raccord selon l'une des revendications précédentes, **caractérisé en ce que** chaque passage (68) ménagé dans l'embout (50) s'étend selon un axe (A68) incliné qui converge vers l'avant vers un axe longitudinal central (X50) de la partie tubulaire (52), avec un angle d'inclinaison (γ68) par rapport à cet axe compris entre 30° et 50°, de préférence égal à 40°.

13. Elément de raccord selon l'une des revendications précédentes, **caractérisé en ce que** chaque passage (68) ménagé dans l'embout (50) a une section en forme de portion d'anneau centrée sur un axe longitudinal central (X50) de la partie tubulaire (52).

14. Elément de raccord selon l'une des revendications précédentes, **caractérisé en ce que** l'embout (50) comprend un poussoir (21) monté à l'intérieur de la partie tubulaire (52), **en ce que** le clapet (70) est de forme annulaire et monté autour du poussoir (21) et **en ce qu'**en position avancée de fermeture, le clapet (70) coopère de manière étanche avec le poussoir (21) et avec la partie tubulaire (52) pour obturer l'orifice avant (522) de la partie tubulaire (52).

15. Raccord (2) de jonction de canalisations (C8, C10) de fluide sous pression, ce raccord comprenant un élément de raccord mâle (4) et un élément de raccord femelle (6), **caractérisé en ce que** l'un au moins des éléments de raccord est selon l'une des revendications 1 à 14.

**Patentansprüche**

1. Stecker- oder Buchsenelement (4, 6) eines Fluidanschlusses (2), der für die Verbindung von Rohrleitungen (C8, C10) für unter Druck stehende Fluide ausgelegt ist,

- dieses Anschlusselement umfassend einen Körper (20), ein Mundstück (50) und ein Ventil (70);
- wobei sich der Körper entlang einer Längsachse (X20) zwischen einer Vorderseite (4A, 6A), die in eine Richtung des Einsteckens des Anschlusselements mit einem komplementären Element der Verbindung gedreht ist, und einer Rückseite (4B, 6B) gegenüber der Vorderseite erstreckt;
- wobei der Körper einerseits einen Sitz (V20) zum teilweisen Aufnehmen des Mundstücks (50) und andererseits mindestens einen ersten Abschnitt (322) einer inneren Leitung (32) zur Zirkulation von Fluid in dem Anschlusselement begrenzt, wobei der erste Abschnitt (322) in Bezug auf den Aufnahmesitz (V20) rückwärts angeordnet ist und mit dem Aufnahmesitz (V20) fluidisch in Verbindung ist;
- das Mundstück umfassend einen röhrenförmigen Abschnitt (52), der nach vorne aus dem Körper (20) hervorsteht;
- wobei ein zweiter Abschnitt (324) der inneren Leitung (32) in einem Innenvolumen (V50) des Mundstücks angeordnet ist und vorne durch eine vordere Öffnung (522) des röhrenförmigen Teils (52) begrenzt ist;
- wobei das Ventil (70) in dem Innenvolumen (V50) des Mundstücks mit der Möglichkeit der Bewegung zwischen einer ausgefahrenen Schließposition, in der das Ventil die vordere Öffnung (522) des rohrförmigen Teils (52) verschließt, und einer zurückgezogenen Öffnungsposition, in der das Ventil der Fluidzirkulation in der inneren Leitung (32) nicht entgegenwirkt, untergebracht ist;
- wobei das Mundstück (50) mit einem Flansch (54) ausgestattet ist, der in Bezug auf den röhrenförmigen Teil (52) nach außen und hinten hervorstehend gebildet ist, wobei der Flansch (54) in dem Aufnahmesitz (V20) mit der Möglichkeit einer Bewegung in Bezug auf den Körper (20) nur parallel zu einer Ebene (P20) radial zu der Längsachse (X20) aufgenommen ist; und
- eine erste Dichtungsbarriere, die aus mindestens einer Dichtung (58; 58, 58') gebildet ist, zwischen eine hintere Oberfläche (545) des Flanschs (54) und eine Vorderseite (233) des Körpers (20) eingefügt ist, wobei diese Vorderseite (233) hinten den Aufnahmeraum (V20) begrenzt und gegenüber der hinteren Oberfläche des Flanschs (54) angeordnet ist,
**dadurch gekennzeichnet, dass**
- eine zweite Dichtungsbarriere, die aus mindestens einer Dichtung (56; 56, 56') gebildet ist, zwischen einer vorderen Fläche (543) des Flanschs und einer Rückseite (283) des Körpers (20) eingefügt ist, wobei diese Rückseite vorne den Aufnahmesitz (V20) begrenzt und gegenüber der vorderen Fläche des Flanschs (54) angeordnet ist;
- ein dritter Abschnitt (326) des inneren Kanals (32) zwischen dem ersten Abschnitt (322) und dem zweiten Abschnitt (324) radial um den Flansch (54) zwischen einer äußeren Umfangsfläche (541) des Flanschs (54) und einer inneren Umfangsfläche (245; 285) des Körpers begrenzt ist, die den Aufnahmesitz (V20) radial zu der Längsachse (X20) begrenzt;
- ein Stopfen (80) den zweiten Abschnitt (324) des inneren Kanals (32) auf der Rückseite verschließt;
- der zweite und dritte Abschnitt (324, 326) des inneren Kanals (32) über mindestens einen Durchgang (68), der in dem Mundstück (50) gebildet ist und in das Innenvolumen (V50) des Mundstücks (50) vor dem Stopfen (80) und auf die äußere Umfangsfläche (541) des Flanschs mündet, in Fluidverbindung sind; und

- eine innere Kammer (36) in dem Anschlusselement (4, 6) gebildet ist und durch den Körper (20), den Flansch (54), den Stopfen (80) und die erste Dichtungsbarriere (58; 58, 58') von dem inneren Kanal (32) getrennt ist.

2. Anschlusselement nach Anspruch 1, **dadurch gekennzeichnet, dass** ein Verhältnis (A2/A1) zwischen einer Fläche (A2) eines durch die zweite Dichtungsbarriere begrenzten Dichtungsabschnitts (S2) und einer Fläche (A1) eines Dichtungsabschnitts (S1), der durch die erste Dichtungsbarriere begrenzt ist, zwischen 0,85 und 1,15, vorzugsweise zwischen 0,95 und 1,05 liegt, besonders bevorzugt gleich 1 ist.

3. Anschlusselement nach einem der vorherigen Ansprüche, **dadurch gekennzeichnet, dass** mindestens eine Entlüftung (40) die innere Kammer (36) mit dem mit der Außenseite des Anschlusselements verbindet und sich durch den Körper (20) erstreckt, vorzugsweise parallel zu der radialen Ebene (P20).

4. Anschlusselement nach einem der vorherigen Ansprüche, **dadurch gekennzeichnet, dass** die innere Kammer (36) durch ein inneres Teil (23) des Körpers (20) begrenzt ist, der kegelstumpfförmig ist und auf einer Achse zentriert ist, die parallel zu der Längsachse (X20) ist und zu der Rückseite des Verbindungselements konvergiert, und das mit einem Zwischenabschnitt (26) des Körpers, der um den inneren Teil (23) angeordnet ist, durch mindestens eine Verbindungslasche (38) verbunden ist, dass sich der erste Abschnitt (322) des inneren Kanals zwischen dem inneren Teil (23) und dem Zwischenabschnitt (26) des Körpers erstreckt, und dass die Aufnahme (V20) nach hinten in den ersten Abschnitt (322) des inneren Kanals (32) mündet.

5. Verbindungselement nach Anspruch 4, **dadurch gekennzeichnet, dass** ein Verhältnis (e38/L23) zwischen einer Stärke (e38) einer Verbindungslasche, gemessen parallel zu der Längsachse (X20) des Körpers (20), und einer Länge (L23) des inneren Teils (23) des Körpers, gemessen entlang der gleichen Längsachse, strikt kleiner als 1 ist, vorzugsweise zwischen 0,15 und 0,40, noch bevorzugter gleich 0,25.

6. Verbindungselement nach einem der Ansprüche 4 oder 5, **dadurch gekennzeichnet, dass** das innere Teil (23) des Körpers, der die innere Kammer (36) begrenzt, die Verbindungslasche(n) (38) und der Zwischenabschnitt (26) des Körpers (20) zusammen ein einstückiges Teil bilden.

7. Anschlusselement nach einem der vorherigen Ansprüche, **dadurch gekennzeichnet, dass** der Flansch (54) einen vorderen Flansch (542), der die vordere Fläche (543) des Flansches bildet, und einen hinteren Flansch (544), der die hintere Fläche (545) des Flansches bildet, umfasst, dass, wenn eine äußere Umfangsfläche (546) des vorderen Flanschs radial in Kontakt mit der inneren Umfangsfläche (285; 245) des Körpers ist, der das Aufnahmevolumen (V20) radial begrenzt, ein ringförmiges Spiel (J) mit einer minimalen radialen Dicke ($e_{Jmin}$) ungleich Null zwischen einer äußeren Umfangsfläche (548) des hinteren Flanschs (544) und der inneren Umfangsfläche (285; 245) des Körpers existiert, und dass der erste und der zweite Abschnitt (322, 324) des inneren Kanals (32) durch das ringförmige Spiel (J) in Fluidverbindung sind.

8. Anschlusselement nach Anspruch 7, **dadurch gekennzeichnet, dass** der Körper (20) einen Deckel (28) umfasst, der in eine Schürze (24) des Körpers eingesetzt ist und eine vordere Öffnung (286) des Körpers definiert, durch die der rohrförmige Teil (52) des Mundstücks (50) nach vorne aus dem Körper (20) hervorsteht, dass die zweite Dichtungsbarriere (56) zwischen einer vorderen Oberfläche (543) des vorderen Flanschs (542) und einer hinteren Fläche (283) des Deckels, die die vordere Öffnung umgibt, angeordnet ist, dass die innere Umfangsfläche (285) des Körpers an dem Deckel (28) gebildet ist, dass ein hinterer Flächenabschnitt (285B) der inneren Umfangsfläche (285) nach hinten aufgeweitet ist und der äußeren Umfangsfläche (548) des hinteren Flanschs (544) radial gegenüberliegt, und dass die äußeren Umfangsflächen (546, 548) des vorderen und hinteren Flansces (542, 544) zylindrisch mit kreisförmigem Außenquerschnitt sind, denselben Außendurchmesser (D542, D544) aufweisen und koaxial sind.

9. Anschlusselement nach einem der vorherigen Ansprüche, **dadurch gekennzeichnet, dass** die hintere Fläche (545) und die vordere Fläche (543) des Flansches (54) ebene axiale Flächen sind, und dass jede Dichtung (58; 58, 58'), die die erste Dichtungsbarriere bildet, und jede Dichtung (56; 56, 56'), die die zweite Dichtungsbarriere bildet, in einer Nut (549) in der hinteren Fläche (545) des Flansches (54) bzw. in einer Nut (547) in der vorderen Fläche (543) des Flanschs untergebracht ist.

10. Anschlusselement nach einem der vorherigen Ansprüche, **dadurch gekennzeichnet, dass** der Stopfen (80) ein auf das Mundstück (50) aufgesetztes Teil ist, das in dem Innenvolumen (V50) des Mundstücks gegenüber einer hinteren Innenschulter (60) des Mundstücks dicht montiert ist.

**11.** Anschlusselement nach einem der vorherigen Ansprüche, **dadurch gekennzeichnet, dass** das Ventil (70) mit einer nach hinten offenen Schürze (73) ausgestattet ist, dass die Schürze des Ventils (70) von Durchgangsöffnungen (76) durchbrochen ist, die an einer äußeren Umfangsfläche des Ventils (70) münden, und dass das Endstück (50) eine Innenfläche (662) begrenzt, die geeignet ist, hinter den Durchgangsöffnungen, wenn das Ventil in der zurückgezogenen Öffnungsposition ist, radial mit dem Ventil zusammenzuwirken.

**12.** Anschlusselement nach einem der vorherigen Ansprüche, **dadurch gekennzeichnet, dass** jeder Durchgang (68), der in dem Ansatzstück (50) bereitgestellt ist, sich entlang einer geneigten Achse (A68) erstreckt, die nach vorne zu einer mittleren Längsachse (X50) des rohrförmigen Teils (52) mit einem Neigungswinkel ($\gamma$68) in Bezug auf diese Achse zwischen 30° und 50°, vorzugsweise gleich 40°, konvergiert.

**13.** Anschlusselement nach einem der vorherigen Ansprüche, **dadurch gekennzeichnet, dass** jeder Durchgang (68), der in dem Endstück (50) ausgebildet ist, einen Querschnitt in Form eines Ringabschnitts aufweist, der auf einer mittleren Längsachse (X50) des rohrförmigen Teils (52) zentriert ist.

**14.** Anschlusselement nach einem der vorherigen Ansprüche, **dadurch gekennzeichnet, dass** das Mundstück (50) einen Drücker (21) umfasst, der im Inneren des rohrförmigen Teils (52) montiert ist, dass das Ventil (70) ringförmig ist und um den Drücker (21) herum montiert ist, und dass das Ventil (70) in der ausgefahrenen Schließposition dicht mit dem Drücker (21) und mit dem rohrförmigen Teil (52) zusammenwirkt, um die vordere Öffnung (522) des rohrförmigen Teils (52) zu verschließen.

**15.** Anschluss (2) zum Verbinden von Leitungen (C8, C10) eines Fluids unter Druck, dieser Anschluss umfassend ein Anschlusssteckerelement (4) und ein Anschlussbuchsenelement (6), **dadurch gekennzeichnet, dass** mindestens eines der Anschlusselemente gemäß einem der Ansprüche 1 bis 14 ist.

**Claims**

**1.** A male or female fluid coupling element (4, 6), designed for joining pressurized fluid pipelines (C8, C10),

- said coupling element comprising a body (20), an nozzle (50) and a valve (70);
- the body extending along a longitudinal axis (X20), between a front side (4A, 6A), facing in a press-fitting direction of the coupling element with a complementary connection element, and a rear side (4B, 6B) opposite the front side;
- the body delimiting, on the one hand, a housing (V20) for partially receiving the nozzle (50) and, on the other hand, at least a first portion (322) of an inner conduit (32) for circulating fluid in the coupling element, the first portion (322) being arranged towards the rear in relation to the receiving housing (V20) and communicating fluidly with the receiving housing (V20),
- the nozzle including a tubular part (52) projecting forward from the body (20);
- a second portion (324) of the inner conduit (32) being arranged in an inner volume (V50) of the nozzle and delimited on the front by a front opening (522) of the tubular part (52);
- the valve (70) being housed in the inner volume (V50) of the nozzle with the possibility of movement between an advanced closed position in which the valve caps the front opening (522) of the tubular part (52) and a retracted opening position where the valve does not oppose the circulation of fluid in the inner conduit (32);
- the nozzle (50) having a flange (54) formed projecting from and towards the rear in relation to the tubular part (52), the flange (54) being received in the receiving housing (V20) with the possibility of movement in relation to the body (20) only parallel to a plane (P20) radial to the longitudinal axis (X20); and
- a first sealing barrier formed by at least one sealing joint (58; 58, 58') being interposed between a rear surface (545) of the flange (54) and a front face (233) of the body (20), this front face (233) delimiting the receiving housing (V20) on the rear side and being arranged opposite the rear surface of the flange (54),
**characterized in that**
- a second sealing barrier formed by at least one sealing joint (56; 56, 56') is interposed between a front surface (543) of the flange and a rear face (283) of the body (20), this rear face delimiting the receiving housing (V20) on the front side and being arranged opposite the front surface of the flange (54);
- a third portion (326) of the inner conduit (32), intermediate between the first portion (322) and the second portion (324), is delimited radially around the flange (54), between an outer peripheral surface (541) of the flange (54) and an inner peripheral surface (245; 285) of the body delimiting the receiving housing (V20) radially to the longitudinal axis (X20);

- a plug (80) caps the second portion (324) of the inner conduit (32) at the rear;
- the second and third portions (324, 326) of the inner conduit (32) are in fluid communication through at least one passage (68) arranged in the nozzle (50) and which opens into the inner volume (V50) of the nozzle (50), in front of the plug (80), and on the outer peripheral surface (541) of the flange; and
- an inner chamber (36) is arranged in the coupling element (4, 6) and separated from the inner conduit (32) by the body (20), the flange (54), the plug (80) and the first sealing barrier (58; 58, 58').

2. The coupling element according to claim 1, **characterized in that** a ratio (A2/A1) between an area (A2) of a sealing section (S2) delimited by the second sealing barrier and an area (A1) of a sealing section (S1) delimited by the first sealing barrier is between 0.85 and 1.15, preferably between 0.95 and 1.05, more preferably equal to 1.

3. The coupling element according to any of the preceding claims, **characterized in that** at least one vent (40) connects the inner chamber (36) to the outside of the coupling element and extends through the body (20), preferably parallel to the radial plane (P20).

4. The coupling element according to any of the preceding claims, **characterized in that** the inner chamber (36) is delimited by an inner part (23) of the body (20), which is frustoconical in shape centered on an axis parallel to the longitudinal axis (X20), converging towards the rear of the coupling element, and which is connected to an intermediate portion (26) of the body arranged around the inner part (23) by at least one connecting bracket (38), **in that** the first portion (322) of the inner conduit extends between the inner part (23) and the intermediate portion (26) of the body, and **in that** the receiving housing (V20) opens towards the rear into the first portion (322) of the inner conduit (32).

5. The coupling element according to claim 4, **characterized in that** a ratio (e38/L23) between a thickness (e38) of a connecting bracket, measured parallel to the longitudinal axis (X20) of the body (20), and a length (L23) of the inner part (23) of the body, measured along the same longitudinal axis, is strictly less than 1, preferably between 0.15 and 0.40, and even more preferably 0.25.

6. The coupling element according to one of claims 4 or 5, **characterized in that** the inner part (23) of the body delimiting the inner chamber (36), the connecting bracket(s) (38) and the intermediate portion (26) of the body (20) together form a single piece.

7. The coupling element according to any of the preceding claims, **characterized in that** the flange (54) comprises a front collar (542) forming the front surface (543) of the flange and a rear collar (544) forming the rear surface (545) of the flange, **in that** when an outer peripheral surface (546) of the front collar is radially in contact with the inner peripheral surface (285; 245) of the body radially defining the receiving volume (V20), an annular clearance (J) of non-zero minimum radial thickness ($e_{Jmin}$) exists between an outer peripheral surface (548) of the rear collar (544) and the inner peripheral surface (285; 245) of the body, and **in that** the first and second portions (322, 324) of the inner conduit (32) are in fluid communication through the annular clearance (J).

8. The coupling element according to claim 7, **characterized in that** the body (20) comprises a cover (28), fitted into a skirt (24) of the body and which defines a front opening (286) of the body through which the tubular part (52) of the nozzle (50) projects out of the body (20) towards the front, **in that** the second sealing barrier (56) is interposed between a front surface (543) of the front collar (542) and a rear face (283) of the cover which surrounds the front opening, **in that** the inner peripheral surface (285) of the body is formed on the cover (28), **in that** a rear surface portion (285B) of the inner peripheral surface (285) is flared towards the rear and radially faces the outer peripheral surface (548) of the rear collars (544) and **in that** the outer peripheral surfaces (546, 548) of the front and rear collars (542, 544) are cylindrical with a circular outer cross-section, of the same outer diameter (D542, D544), and coaxial.

9. The coupling element according to one of the preceding claims, **characterized in that** the rear surface (545) and the front surface (543) of the flange (54) are flat axial surfaces and **in that** each sealing joint (58; 58, 58') forming the first sealing barrier and each sealing joint (56; 56, 56') forming the second sealing barrier is received in a respective groove (549) on the back surface (545) of the flange (54) or a groove (547) on the front surface (543) of the flange.

10. The coupling element according to any of the preceding claims, **characterized in that** the plug (80) is a part attached to the nozzle (50), mounted in a sealed manner in the inner volume (V50) of the nozzle opposite a rear inner shoulder (60) of the nozzle.

11. The coupling element according to one of the preceding claims, **characterized in that** the valve (70) is equipped with a skirt (73) open towards the rear, **in that** the skirt of the valve (70) is pierced with through openings (76) which open onto an outer peripheral surface of the valve (70), and **in that** the nozzle (50) delimits an inner surface (662) capable of interacting radially with the valve, to the rear of the through openings, when the valve is in the retracted open position.

12. The coupling element according to one of the preceding claims, **characterized in that** each passage (68) arranged in the nozzle (50) extends along an inclined axis (A68) which converges towards the front, towards a central longitudinal axis (X50) of the tubular part (52), with an angle of inclination ($\gamma$68) in relation to this axis of between 30° and 50°, preferably equal to 40°.

13. The coupling element according to any of the preceding claims, **characterized in that** each passage (68) arranged in the nozzle (50) has a section in the form of a ring portion centered on a central longitudinal axis (X50) of the tubular part (52).

14. The coupling element according to one of the preceding claims, **characterized in that** the nozzle (50) comprises a plunger (21) mounted inside the tubular part (52), **in that** the valve (70) is annular in shape and mounted around the plunger (21) and **in that**, in the advanced closing position, the valve (70) interacts in a sealed manner with the plunger (21) and with the tubular part (52) in order to close off the front opening (522) of the tubular part (52).

15. A connection (2) for joining pressurized fluid pipelines (C8, C10), said connection comprising a male coupling element (4) and a female coupling element (6), **characterized in that** at least one of the coupling elements is according to one of claims 1 to 14.

EP 4 083 487 B1

FIG.1

EP 4 083 487 B1

FIG.2

FIG.3

FIG.4

FIG.5

244 40 38 42 42 24 23 20 -36- X20 38 40 40 38 α38 42 e42

# FIG.6

FIG.7

**FIG.9**

**FIG.10**

FIG.11

EP 4 083 487 B1

## RÉFÉRENCES CITÉES DANS LA DESCRIPTION

**Documents brevets cités dans la description**

- US 3508580 A
- EP 3301341 A